# EUROPEAN PATENT SPECIFICATION

(11) **EP 2 642 264 B1**
(45) Date of publication and mention of the grant of the patent: **02.01.2019**
(21) Application number: 12003637.1
(22) Date of filing: 09.05.2012
(51) Int. Cl.: G01L 1/22, G01L 5/16

(54) **Multi-axis loadcell**
Mehrachsige Ladezelle
Cellule de charge à axes multiples

(30) Priority: 19.03.2012 CN 201210071488
(43) Date of publication of application: 25.09.2013
(73) Proprietor: Sunrise Auto Safety Technology CO., LTD., Nanning 530007 (CN)
(72) Inventor: Huang, York Yue, Novi, Mi 48374 (US)
(74) Representative: Meyer, Thorsten

(56) References cited:
- US-A- 4 821 582
- US-A- 4 911 024

## Description

### FIELD OF THE INVENTION

The present invention relates to the field of transducer technology, and more particularly, to a multi-axis loadcell.

### BACKGROUND OF THE INVENTION

Multi-axis loadcells are widely used in the field of Aeronautics and Astronautics, automotive, robotics, automation, medical and sports equipment, e.g. the six component balance in the wind tunnel test, the six-DOF wheel force sensor in the vehicle road test, the multi-axis loadcell for Crash Test Dummy in the auto crash test, etc..

According to the different decoupling method, the multi-axis loadcells could be classified into two types: structurally decoupled multi-axis loadcell and algorithm decoupled multi-axis loadcell. The key point of the multi-axis loadcell lies in the flexure design, the placement and the bridge circuit of the strain gages. The structurally decoupled design allows the removal of the coupling between axes due to the specific flexure design and strain gage placement so that the output signals of the loadcell are the actual forces and moments. In the algorithm decoupled design, the actual forces and moments are obtained by manipulating the output signals through a specific algorithm, due to the coupling between each axis is significant. Regardless the six axis loadcell is structurally decoupled or algorithm decoupled, overload protection is always required for industrial robot application in the complex and demanding operation environment.

US 4911024A discloses a force/torque transducer for measuring forces and torques between its upper rigid ring member and lower rigid ring member, wherein the upper rigid member is connected to lower rigid member by four constant cross section flexural beams. Herein, strain gauges are placed at the first, second, third and fourth strain fields, and a bridge circuit in which the strain gauges are electrically connected to be additive with respect to the load of the single axis and neutral with respect to loads of all other axes, the bridge circuit providing an output that indicates load of the single axis and is decoupled with respect to loads of all other axes.

US 4821582A discloses a load transducer used for determining loads on a tire in a tire testing apparatus. A tire support spindle has an end plate mounted on one end of the transducer on a center support sleeve which is supported relative to an outer housing at spaced locations in direction along the wheel rolling axis. The support sleeve is supported relative to the outer housing at each end by four arms or beams that operate as shear beams in reaction to the vertical and rolling loads on the tire, and the corresponding moments created by these two forces or loads.

### SUMMARY OF THE INVENTION

One objective of the present invention is to provide a multi-axis loadcell which allows for convenient installment, and is characteristic of simple construction.

To achieve the above-mentioned object, the present invention provides a multi-axis loadcell, which includes a flexure; wherein the flexure includes a upper member, a lower member and at least three force-measuring beams; each of the force-measuring beams having a rectangle-shaped cross section and being arranged between the upper member and the lower member with its upper end connected to the upper member and its lower end connected to the lower member; the force-measuring beam including a front side, a rear side opposite to the front side, a left side and a right side opposite to the left side; the multi-axis loadcell further comprising at least four strain gages, each of which is arranged on a surface of the side of the force-measuring beam for measuring longitudinal strain, transverse strain, shearing strains of positive 45° and negative 45° simultaneously; wherein at least two strain gages being respectively arranged in middle of a same side surface of the force-measuring beam in the longitudinal and transverse directions for measuring longitudinal strain and transverse strain; while at least two strain gages being respectively arranged in middle of a same side surface of the force-measuring beam in the positive 45° direction and negative 45° direction, for measuring the shearing strains of positive 45° and of negative 45° , wherein a plurality of top supports extend from the lower end of the upper member, while a plurality of bottom supports extend from the upper end of the lower member; the top support is correspondingly engaged with the bottom support to form a junction with a gap form therein; when a relative displacement is caused between the top support and the bottom support to narrow the gap, the top support and the bottom support are contacted with each other to form a mutual limitation for each other.

As an embodiment of the present invention, at least four strain gages are arranged in the middle of one side of the force-measuring beam in the directions of longitudinal, transverse, positive 45° and negative 45° respectively, configured to measure the longitudinal strain, the transverse strain, and the shearing strain of positive 45° and of negative 45° respectively.

As another embodiment of the present invention, both of the number of the top support and the number of the bottom support are larger than or equal to three.

The multi-axis loadcell according to the embodiment of the present invention includes a flexure and a plurality of strain gages which are used to measure the longitudinal strain, the transverse strain, and the shearing strains of positive 45° and of negative 45° negative simultaneously. While forces or moments are applied to the multi-axis loadcell, the force-measuring beams produce strain, and the strain is measured and converted into output electrical signal by strain gages. In comparison with the prior art, this multi-axis loadcell allows for convenient installment, and is characteristic of simple construction, could achieve not only structure decoupling but also algorithm decoupling, and enables to measure the force signal value and torque signal value which are applied onto the transducer. Furthermore, there are top supports and bottom supports which are used as an overload protection structure on the multi-axis loadcell. The loadcell is prevented from being damaged in the complex and demanding operation environment.

### BRIEF DESCRIPTION OF THE DRAWINGS

Other aspects, features, and advantages of this invention will become apparent from the following detailed description when taken in conjunction with the accompanying drawings, which are a part of this disclosure and which illustrate, by way of example, principles of this invention. The accompanying drawings facilitate an understanding of the various embodiments of this invention. In such drawings:
Fig. 1 is a schematic illustration of multi-axis loadcell without any plate according to the embodiment of the present invention;
Fig. 2 is a schematic illustration of multi-axis loadcell with plates according to the embodiment of the present invention;
Fig. 3 is an elevation drawing illustrating the multi-axis loadcell according to the embodiment of the present invention;
Fig. 4 is a partial enlarged drawing illustrating a force-measuring beam of the multi-axis loadcell shown in Fig. 3 according to the embodiment of the present invention;
Fig. 5 is a schematic illustration of the multi-axis loadcell according to the first embodiment of the present invention;
Fig. 6 is a schematic illustration of the bridges connection of the strain gage of the multi-axis loadcell according to the first embodiment of the present invention;
Fig. 7 is a schematic illustration of the multi-axis loadcell according the second embodiment of the present invention;
Fig. 8 is a schematic illustration of the multi-axis loadcell according the third embodiment of the present invention;
Fig. 9 is a schematic illustration of the bridge connections of the strain gage of the multi-axis loadcell according to the third embodiment of the present invention;
Fig. 10 is a schematic illustration of the multi-axis loadcell according the fourth embodiment of the present invention;
Fig. 11 is a schematic illustration of the bridge connections of the strain gage of the multi-axis loadcell according to the fourth embodiment of the present invention;
Fig. 12 is a schematic illustration of the multi-axis loadcell according the fifth embodiment of the present invention;
Fig. 13 is a schematic illustration of the bridge connections of the strain gage of the multi-axis loadcell according to the fifth embodiment of the present invention;
Fig. 14 is a schematic illustration of the multi-axis loadcell according the sixth embodiment of the present invention;
Fig. 15 is a schematic illustration of the bridge connections of the strain gage of the multi-axis loadcell according to the sixth embodiment of the present invention;
Fig. 16 is a schematic illustration of the multi-axis loadcell according the seventh embodiment of the present invention;
Fig. 17 is a schematic illustration of the bridge connections of the strain gage of the multi-axis loadcell according to the seventh embodiment of the present invention;
Fig. 18 is a schematic illustration of the multi-axis loadcell according the eighth embodiment of the present invention; and
Fig. 19 is a schematic illustration of the bridge connections of the strain gage of the multi-axis loadcell according to the eighth embodiment of the present invention.

### DETAILED DESCRIPTION OF ILLUSTRATED EMBODIMENTS

Various preferred embodiments of the invention will now be described with reference to the figures.

The multi-axis loadcell according to the embodiments of the present invention includes a flexure; the flexure comprising a upper member, a lower member and at least three force-measuring beams; the force-measuring beam having a rectangle-shape cross section; the force-measuring beams being arranged between the upper member and the lower member; an upper end of the force-measuring beam being connected to the upper member, an lower end of the force-measuring beam being connected to the lower member; the force-measuring beam including a front side, a rear side, a left side and a right side, with the front side being opposite to the rear side, and the left side being opposite to the right side; the multi-axis loadcell further having at least four strain gages, the strain gages being arranged on the surface of the side of the force-measuring beam, configured to measure longitudinal strain, transverse strain, shearing strain of positive 45° and shearing strain of negative 45° simultaneously; at least two strain gages being arranged in the middle of the same side of the force-measuring beam in the longitudinal and transverse directions respectively, configured to measure the longitudinal strain and the transverse strain; at least two strain gages being arranged in the middle of the same side of the force-measuring beam in the positive 45° and negative 45° directions respectively, configured to measure the shearing strain of positive 45° and of negative 45°, wherein a plurality of top supports extend from the lower end of the upper member, while a plurality of bottom supports extend from the upper end of the lower member; the top support is correspondingly engaged with the bottom support to form a junction with a gap form therein; when a relative displacement is caused between the top support and the bottom support to narrow the gap, the top support and the bottom support are contacted with each other to form a mutual limitation for each other. The bridge circuit employs full bridge or half bridge.

Within a preferable embodiment of the present invention, at least four strain gages are arranged in the middle of the same side of the force-measuring beam in the directions of longitudinal, transverse, positive 45° and negative 45°, configured to measure the longitudinal strain, the transverse strain, and the shearing strains of positive 45° and of negative 45°.

The term "positive 45°" is at positive 45° compared to the transverse direction, "negative 45°" is at negative 45° compared to the transverse direction.

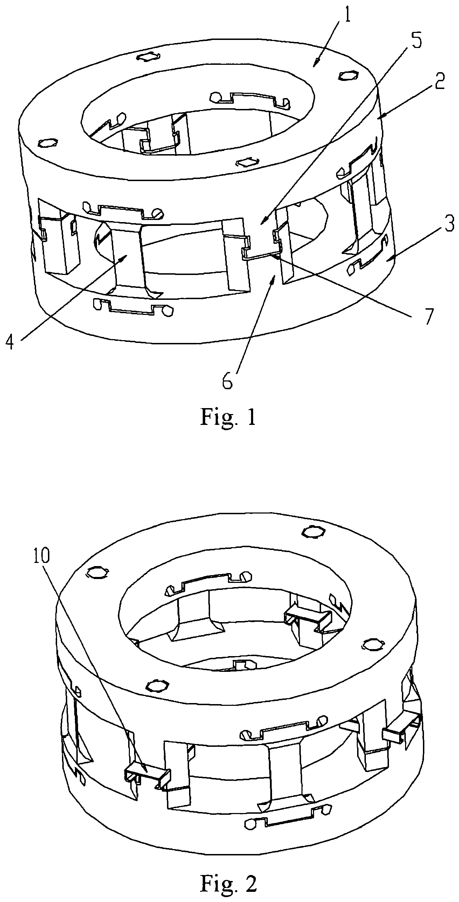

Referring to Fig.1, it shows a schematic illustration of multi-axis loadcell without any plate according to the embodiment of the present invention.

As shown in Fig.1, the flexure 1 of the multi-axis loadcell includes an upper member 2, a lower member 3 and at least three force-measuring beams 4. The upper member 2 are coupled to the lower member 3 via the force-measuring beams 4, that is, the force-measuring beams 4 are arranged between the upper member 2 and the lower member 3, the top of the force-measuring beam 4 is connected to the upper member 2, and the bottom of the force-measuring beam 4 is connected to the lower member 3.

A plurality of top supports 5 extend from the lower end of the upper member 2, while a plurality of bottom supports 6 extend from the upper end of the lower member 3; the top support 5 is engaged with the bottom support 6 correspondingly to form a junction with a gap 7 form therein; when the gap 7 is decreased, which is caused by a relative displacement between the top support 5 and the bottom support 6, the top support 5 is contacted with the bottom support 6 to form a mutual limitation for each other; wherein both of the number of the top support 5 and the number of the bottom support 6 are larger than or equal to three.

In an embodiment of the present invention, no plate is inserted into the gap 7 of the junction formed by the top support 5 and the bottom support 6. Fig. 1 shows a schematic illustration of multi-axis loadcell without any plate.

In anther embodiment, referring to Fig. 2, it is a schematic illustration of multi-axis loadcell with plates. A plate 10 is inserted into the gap 7 of the junction formed by the top support 5 and the bottom support 6.

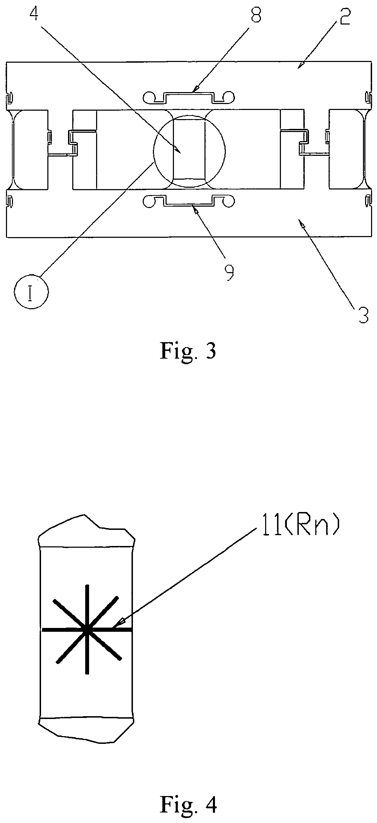

Referring to Fig. 3, it is an elevation drawing illustrating the multi-axis loadcell according to the embodiment of the present invention.

As shown in Fig.3, a groove 8 is formed in the upper member 2 above the junction of the force-measuring beam 4 and the upper member 2; a groove 9 is formed in the lower member 3 below the junction of the force-measuring beam 4 and the lower member 3.

Fig. 4 is a partial enlarged drawing illustrating a force-measuring beam of the multi-axis loadcell shown in Fig. 3.

At least one strain gage is arranged on the side surface (position I as shown in Fig.3) of the force-measuring beam 4. For example, as shown in Fig.4, a strain rosette 11 is arranged onto the side surface of the force-measuring beam 4. The resistance strain rosette is a kind of strain gage having two or more sensitive grids. In practice, the strain rosette 11 could be replaced by several strain gages Rn.

The flexure 1 of the multi-axis loadcell according to the present invention has top supports 5 and bottom supports 6 which are engaged with each other correspondingly to form junctions therebetween, and gap 7 is form at the junction, which serves the function that: when the multi-axis loadcell is applied on force or moment, a relative displacement exists between the upper member 2 and the lower member 3 of the flexure 1, the gap 7 between the top support 5 the bottom support 6 is getting smaller. When the force or moment is beyond a predetermined value, the gap 7 between the top support 5 and the bottom support 6 is disappeared, and then the top support 5 and the bottom support 6 are contacted with each other, serving the function of overload protection, so that the strain gage of the force-measuring beam 4 is prevented from being damaged.

According to multi-axis loadcell, the groove 8 is formed in the upper member 2, and a groove 9 is formed in the lower member 3, which serves the function that: forming grooves on the upper member 2 and the lower member 3 is to reducing stiffness thereof. When the force or moment is overloaded, the groove 8 and the groove 9 facility a bigger relative displacement between the upper member 2 and the lower member 3, and ensure the top support 5 and the bottom support 6 to contacted with each other, so that the strain gage of the force-measuring beam 4 is prevented from being damaged.

Preferably, referring to Fig.2, the upper member 2 and the lower member 3 are both circular. At least three force-measuring beams 4 are arranged on the outskirts of the upper member 2 and the lower member 3, to couple the upper member 2 to the lower member 3. In the embodiment, the force-measuring beams 4 could be evenly distributed, and it also could not be without evenly distributed.

Preferably, the force-measuring beam 4 could be rectangle shape, and the force-measuring beam 4 includes a front side, a rear side, a left side and a right side; wherein, the front side is facing outwards regarding to the force-measuring beam, the rear side is facing the centerline of the force-measuring beam, and the left side and the right side are the two side of the force-measuring beam. The front side is opposite to the rear side, and the left side is opposite to the right side.

It should be noted that, the embodiments of the present invention are merely described by the shape of annular, the upper member 2 and the lower member 3 could be any other shape, e.g. the upper member 2 and the lower member 3 also could be rectangle shape, hexagon shape or octahedron shape, etc. the structure of the upper member 2 could be identical with that of the lower member 3, also could be different from that of the lower member 3, both of them could be parallel to each other; there could be holes formed in the upper member 2 and the lower member 3.

The top support, the bottom support, the plate and the grooves formed in the top support and the bottom support are used for overload protection, whose shapes are without specific shapes. As long as the top supports are engaged with the bottom supports correspondingly and they could be limited to each other, the over load protection can be achieved. If the overload protection function is not necessary in practice, the multi-axis loadcell could be set without any overload protection structure.

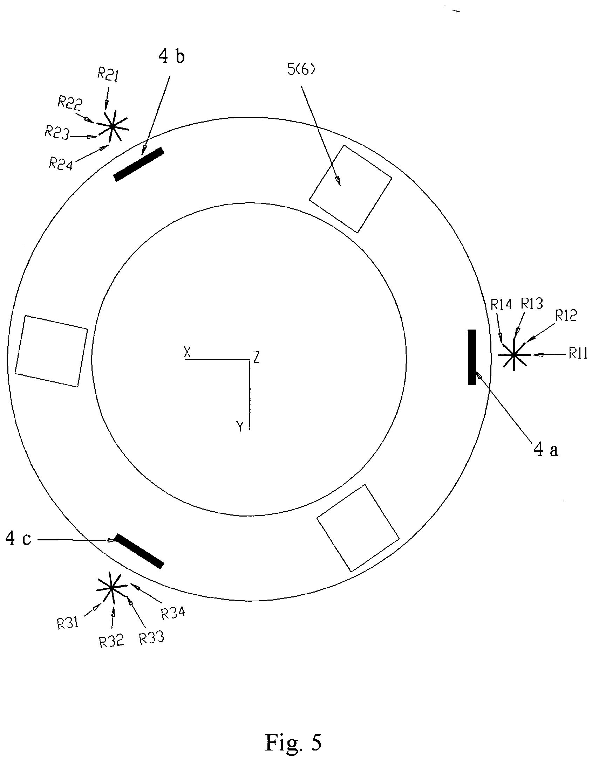

This multi-axis loadcell allows for convenient installment, and is characteristic of simple construction, could achieve not only structure decoupling but also algorithm decoupling. Furthermore, the multi-axis loadcell could serve the function of overload protection, and avoid damaging the transducer, so as to adjust to the extreme and complicated operation demand. Combined with Figs. 5-19, the following statement is detailedly described with the arrangement and the bridge circuit method of the strain gage of the multi-axis loadcell.

Referring to Fig.5, it is a schematic illustration of the multi-axis loadcell according to the first embodiment of the present invention.

In the first embodiment, four strain gages are arranged on one side of the force-measuring beam in the directions of longitudinal, transverse, positive 45° and negative 45° respectively, configured to measure the longitudinal strain, the transverse strain, and the shearing strains of positive 45° and of negative 45° respectively.

As shown in Fig.5, the multi-axis loadcell includes three force-measuring beams, which are force-measuring beam 4a, force-measuring beam 4b and force-measuring beam 4c. Four strain gages are arranged on each of the above force-measuring beams, the detailed is as follow:

Four strain gages are arranged on front side of force-measuring beam 4a in the directions of longitudinal, transverse, positive 45° and negative 45° respectively, which are strain gages R11, R13, R14 and R12 as shown in Fig.5;

Four strain gages are arranged on front side of force-measuring beam 4b in the directions of longitudinal, transverse, positive 45° and negative 45° respectively, which are strain gages R21, R23, R24 and R22 as shown in Fig.5;

Four strain gages are arranged on front side of force-measuring beam 4c in the directions of longitudinal, transverse, positive 45° and negative 45° respectively, which are strain gages R31, R33, R34 and R32 as shown in Fig.5;

In practice, four strain gages arranged on the same side of the force-measuring beam in the directions of longitudinal, transverse, positive 45° and negative 45° respectively could be stacked together or not stacked. The above four strain gages could be replaced by strain rosette.

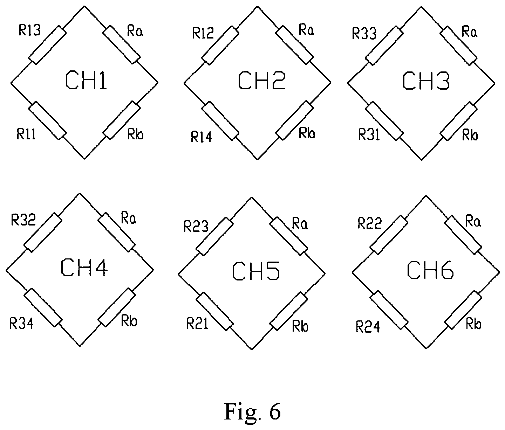

Referring to Fig. 6, it is a schematic illustration of the bridges connection of the strain gage of the multi-axis loadcell according to the first embodiment of the present invention.

According to the multi-axis loadcell of the first embodiment, resistances Ra and Rb are employed in bridges circuit design of the strain gage, and the resistance values of resistances Ra and Rb are not changed when the force-measuring beam is applied on force. Referring to Fig.6, there are six signal channels to output signal according to the bridges circuit design of the strain gage, which are signals CH1, CH2, CH3, CH4, CH5 and CH6. The detailed is as follow:

R11, R13, Ra and Rb constitute a bridge circuit as shown in Fig.6, when the flexure is applied on force to produce strain, the resistance changes of R11 and R13 are ΔR11 and ΔR13, the strain is converted into electrical signal, to obtain signal CH1.

R12, R14, Ra and Rb constitute a bridge circuit as shown in Fig.6, when the flexure is applied on force to produce strain, the resistance changes of R12 and R14 are ΔR12 and ΔR14, the strain is converted into electrical signal, to obtain signal CH2.

R31, R33, Ra and Rb constitute a bridge circuit as shown in Fig.6, when the flexure is applied on force to produce strain, the resistance changes of R31 and R33 are ΔR31 and ΔR33, the strain is converted into electrical signal, to obtain signal CH3.

R32, R34, Ra and Rb constitute a bridge circuit as shown in Fig.6, when the flexure is applied on force to produce strain, the resistance changes of R32 and R34 are ΔR32 and ΔR34, the strain is converted into electrical signal, to obtain signal CH4.

R21, R23, Ra and Rb constitute a bridge circuit as shown in Fig.6, when the flexure is applied on force to produce strain, the resistance changes of R21 and R23 are ΔR21 and ΔR23, the strain is converted into electrical signal, to obtain signal CH5.

R22, R24, Ra and Rb constitute a bridge circuit as shown in Fig.6, when the flexure is applied on force to produce strain, the resistance changes of R22 and R24 are ΔR22 and ΔR24, the strain is converted into electrical signal, to obtain signal CH6.

After signals CH1, CH2, CH3, CH4, CH5 and CH6 output from six channels of the multi-axis loadcell are obtained, they are decoupled via matrix computation, then the value of the force or force torque signals which are applied onto the transducer are obtained. This decoupling is carried out by the following matrix computation in this embodiment: [F]=[C][CH]; matrix[F] includes force signals FX, FY, FZ and force torque signals MX, MY and MZ; wherein, signal FX is the force signal along the X-axis direction as shown in Fig.5, signal FY is the force signal along the Y-axis direction as shown in Fig.5, signal FZ is the force signal along the Z-axis direction as shown in Fig.5. Signal MX is the force torque signal along the X-axis direction as shown in Fig.5, signal MY is the force torque signal along the Y-axis direction as shown in Fig.5, Signal MZ is the force torque signal along the Z-axis direction as shown in Fig.5.

Matrix[C] is coefficient matrix, which comes from calibration equipment. In practice, the calibration equipment applies specific force or force torque onto the multi-axis loadcell, the output signals from each channel are recorded, and to obtain the relationship between the signals output from the transducer and the specific force and force torque, then coefficient matrix [C] is obtained.

[CH] matrix is the output signal matrix of the multi-axis loadcell.

It should be noted that the matrix computation coefficient [C] and [F]=[C][CH] are calculated via microprocessor, or by the specific circuit within the transducer.

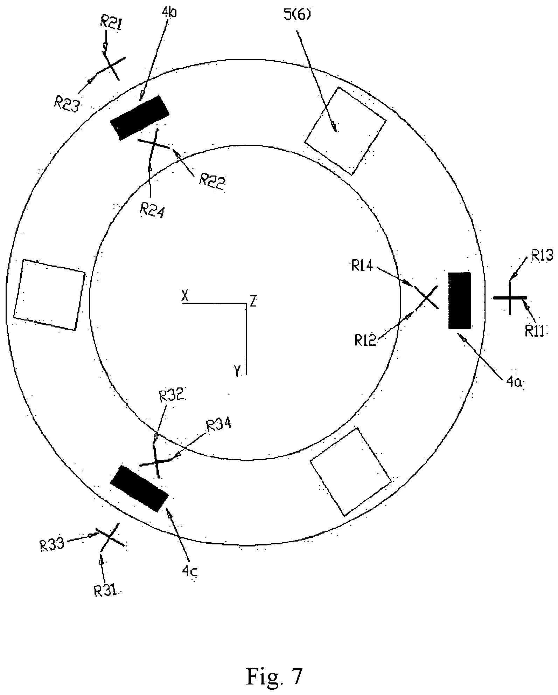

Referring to Fig. 7, it is a schematic illustration of the multi-axis loadcell according the second embodiment of the present invention.

Two strain gages are arranged on each of two opposed sides of the force-measuring beam of the multi-axis loadcell according to the second embodiment of the present invention; Two strain gages on one of the opposed sides are arranged in the directions of positive 45° and negative 45° respectively, configured to measure the shearing strains of positive 45° and of negative 45°; the other two strain gages on the other one of the opposed sides are arranged in the directions of longitudinal and transverse respectively, configured to measure the longitudinal strain and transverse strain respectively.

As shown in Fig.7, the multi-axis loadcell includes three force-measuring beams, which are force-measuring beam 4a, force-measuring beam 4b and force-measuring beam 4c. Four strain gages are arranged on each of the above force-measuring beams, the detailed is as follow:

Strain gages R11 and R13 are arranged on front side of force-measuring beam 4a in the directions of longitudinal and transverse respectively; Strain gages R12 and R14 are arranged on rear side of force-measuring beam 4a in the directions of negative 45° and positive 45° respectively.

Strain gages R21 and R23 are arranged on front side of force-measuring beam 4b in the directions of longitudinal and transverse respectively; Strain gages R22 and R24 are arranged on rear side of force-measuring beam 4b in the directions of negative 45° and positive 45° respectively.

Strain gages R31 and R33 are arranged on front side of force-measuring beam 4c in the directions of longitudinal and transverse respectively; Strain gages R32 and R34 are arranged on rear side of force-measuring beam 4a in the directions of negative 45° and positive 45° respectively.

In practice, four strain gages arranged on the same side of the force-measuring beam could be stacked together or not stacked. The above two strain gages arranged on the same side of the force-measuring beam could be replaced by strain rosette.

The bridge circuit connection and the decoupling principle of the multi-axis loadcell of the second embodiment of the present invention are identical to the first embodiment, so no more detailed description here.

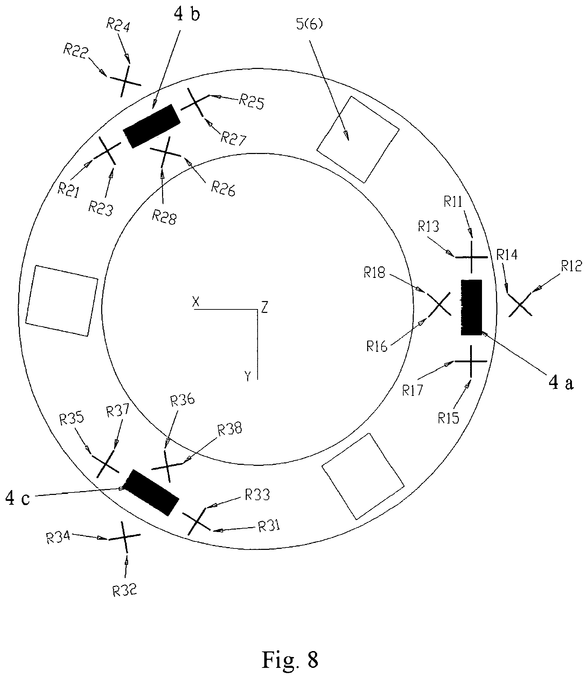

Referring to Fig. 8, it is a schematic illustration of the multi-axis loadcell according the third embodiment of the present invention.

Two strain gages are arranged on each of two opposed sides of the force-measuring beam of the multi-axis loadcell according to the third embodiment of the present invention in the directions of positive 45° and negative 45° respectively, configured to measure the shearing strains of positive 45° and of negative 45°; two strain gages on each of the other two opposed sides are arranged in the directions of longitudinal and transverse respectively, configured to measure the longitudinal strain and transverse strain respectively.

As shown in Fig.8, the multi-axis loadcell includes three force-measuring beams, which are force-measuring beam 4a, force-measuring beam 4b and force-measuring beam 4c. Eight strain gages are arranged on each of the above force-measuring beams, the detailed is as follow:

Strain gages R14 and R12 are arranged on front side of force-measuring beam 4a in the directions of positive 45° and negative 45° respectively; Strain gages R18 and R16 are arranged on rear side of force-measuring beam 4a in the directions of positive 45° and negative 45° respectively; Strain gages R11 and R13 are arranged on left side of force-measuring beam 4a in the directions of longitudinal and transverse respectively; Strain gages R15 and R17 are arranged on right side of force-measuring beam 4a in the directions of longitudinal and transverse respectively.

Strain gages R24 and R22 are arranged on front side of force-measuring beam 4b in the directions of positive 45° and negative 45° respectively; Strain gages R28 and R26 are arranged on rear side of force-measuring beam 4b in the directions of positive 45° and negative 45° respectively; Strain gages R21 and R23 are arranged on left side of force-measuring beam 4b in the directions of longitudinal and transverse respectively; Strain gages R25 and R27 are arranged on right side of force-measuring beam 4b in the directions of longitudinal and transverse respectively.

Strain gages R34 and R32 are arranged on front side of force-measuring beam 4c in the directions of positive 45° and negative 45° respectively; Strain gages R38 and R36 are arranged on rear side of force-measuring beam 4c in the directions of positive 45° and negative 45° respectively; Strain gages R31 and R33 are arranged on left side of force-measuring beam 4c in the directions of longitudinal and transverse respectively; Strain gages R35 and R37 are arranged on right side of force-measuring beam 4c in the directions of longitudinal and transverse respectively.

In practice, two strain gages arranged on the same side of the force-measuring beam in the directions of positive 45° and negative 45° respectively could be stacked together or not stacked; two strain gages arranged on the same side of the force-measuring beam in the directions of longitudinal and transverse respectively could be stacked together or not stacked; the above strain gages could be replaced by strain rosette.

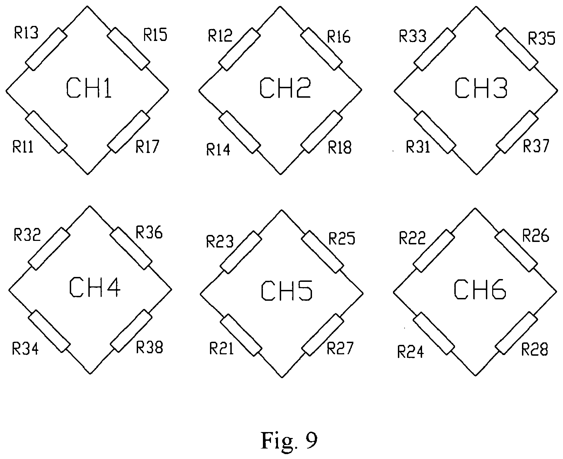

Referring to Fig. 9, it is a schematic illustration of the bridge connections of the strain gage of the multi-axis loadcell according to the third embodiment of the present invention.

There are six signal channels to output signal according to the bridges circuit design of the strain gage, in accordance with the multi-axis loadcell of the third embodiment, which are signals CH1, CH2, CH3, CH4, CH5 and CH6. The detailed is as follow:

R11, R13, R15 and R17 constitute a bridge circuit as shown in Fig.9, when the flexure is applied on force to produce strain, the resistance changes of R11, R13, R15 and R17 are ΔR11, ΔR13, ΔR15 and ΔR17, the strain is converted into electrical signal, to obtain signal CH1.

R12, R14, R16 and R18 constitute a bridge circuit as shown in Fig.9, when the flexure is applied on force to produce strain, the resistance changes of R12, R14, R16 and R18 are ΔR12, ΔR14, ΔR16 and ΔR18, the strain is converted into electrical signal, to obtain signal CH2.

R31, R33, R35 and R37 constitute a bridge circuit as shown in Fig.9, when the flexure is applied on force to produce strain, the resistance changes of R31, R33, R35 and R37 are ΔR31, ΔR33, ΔR35 and ΔR37, the strain is converted into electrical signal, to obtain signal CH3.

R32, R34, R36 and R38 constitute a bridge circuit as shown in Fig.9, when the flexure is applied on force to produce strain, the resistance changes of R32, R34, R36 and R38 are ΔR32, ΔR34, ΔR36 and ΔR38, the strain is converted into electrical signal, to obtain signal CH4.

R21, R23, R25 and R27 constitute a bridge circuit as shown in Fig.9, when the flexure is applied on force to produce strain, the resistance changes of R21, R23, R25 and R27 are ΔR21, ΔR23, ΔR25 and ΔR27, the strain is converted into electrical signal, to obtain signal CH5.

R22, R24, R26 and R28 constitute a bridge circuit as shown in Fig.9, when the flexure is applied on force to produce strain, the resistance changes of R22, R24, R26 and R28 are ΔR22, ΔR24, ΔR26 and ΔR28, the strain is converted into electrical signal, to obtain signal CH6.

After signals CH1, CH2, CH3, CH 4, CH5 and CH6 output from six channels of the multi-axis loadcell are obtained, they are decoupled via matrix computation, then the value of the force or force torque signals which are applied onto the transducer are obtained. The decoupling principle is identical to the first embodiment, so no more detailed description here.

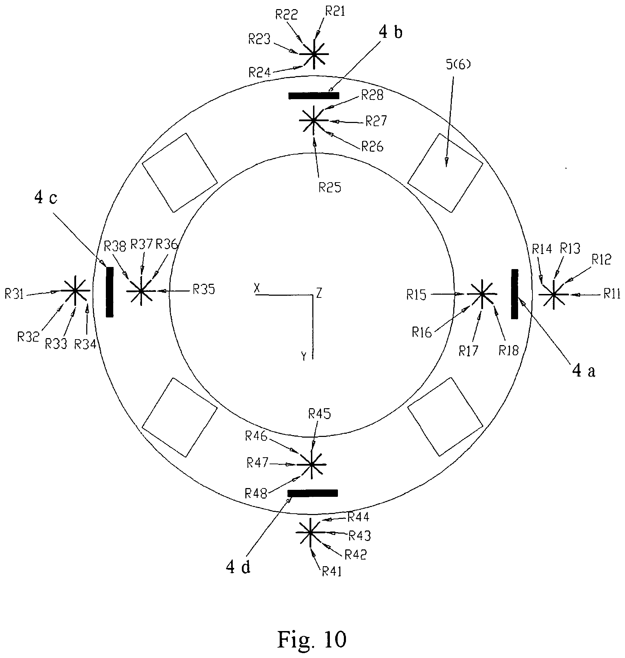

Referring to Fig.10, it is a schematic illustration of the multi-axis loadcell according the fourth embodiment of the present invention.

In the fourth embodiment, four strain gages are arranged on each one of two opposed sides of the force-measuring beam in the directions of longitudinal, transverse, positive 45° and negative 45° respectively, configured to measure the longitudinal strain, the transverse strain, and the shearing strains of positive 45° and of negative 45° respectively.

As shown in Fig.10, the multi-axis loadcell includes four force-measuring beams, which are force-measuring beam 4a, force-measuring beam 4b, force-measuring beam 4c and force-measuring beam 4d. Four strain gages are arranged on the front side and the rear side respectively of each force-measuring beams, the detailed is as follow:

Four strain gages are arranged on front side of force-measuring beam 4a in the directions of longitudinal, transverse, positive 45° and negative 45° respectively, which are strain gages R11, R13, R14 and R12 as shown in Fig.10;

Four strain gages are arranged on rear side of force-measuring beam 4a in the directions of longitudinal, transverse, positive 45° and negative 45° respectively, which are strain gages R15, R17, R18 and R16 as shown in Fig.10;

Four strain gages are arranged on front side of force-measuring beam 4b in the directions of longitudinal, transverse, positive 45° and negative 45° respectively, which are strain gages R21, R23, R24 and R22 as shown in Fig.10;

Four strain gages are arranged on rear side of force-measuring beam 4b in the directions of longitudinal, transverse, positive 45° and negative 45° respectively, which are strain gages R25, R27, R28 and R26 as shown in Fig.10;

Four strain gages are arranged on front side of force-measuring beam 4c in the directions of longitudinal, transverse, positive 45° and negative 45° respectively, which are strain gages R31, R33, R34 and R32 as shown in Fig.10;

Four strain gages are arranged on rear side of force-measuring beam 4c in the directions of longitudinal, transverse, positive 45° and negative 45° respectively, which are strain gages R35, R37, R38 and R36 as shown in Fig.10;

Four strain gages are arranged on front side of force-measuring beam 4d in the directions of longitudinal, transverse, positive 45° and negative 45° respectively, which are strain gages R41, R43, R44 and R42 as shown in Fig.10;

Four strain gages are arranged on rear side of force-measuring beam 4d in the directions of longitudinal, transverse, positive 45° and negative 45° respectively, which are strain gages R45, R47, R48 and R46 as shown in Fig.10;

In practice, four strain gages arranged on the same side of the force-measuring beam in the directions of longitudinal, transverse, positive 45° and negative 45° respectively could be stacked together or not stacked. The above four strain gages could be replaced by strain rosette.

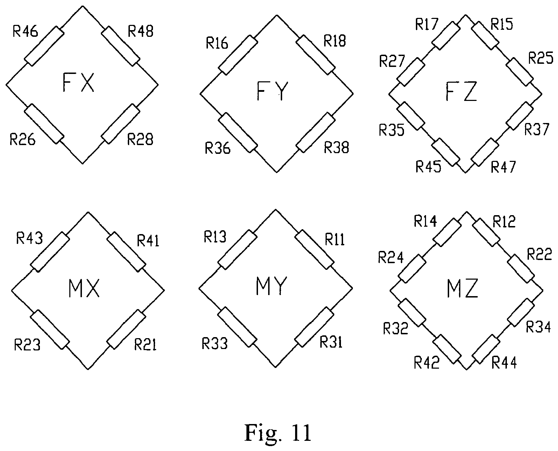

Referring to Fig. 11, it is a schematic illustration of the bridge connections of the strain gage of the multi-axis loadcell according to the fourth embodiment of the present invention.

The fourth embodiment shows bridges circuit design of the strain gage , and there are three force signals FX, FY and FZ, and three force torque signals MX, MY and MZ are obtained. The detailed is as follow:

R26, R28, R46 and R48 constitute a bridge circuit as shown in Fig.11, when the flexure is applied on force to produce strain, the resistance changes of R26, R28, R46 and R48 are ΔR26, ΔR28, ΔR46 and ΔR48, the strain is converted into electrical signal, to obtain signal FX. Wherein, signal FX is the force signal along the X-axis direction shown in Fig.10.

R16, R18, R36 and R38 constitute a bridge circuit as shown in Fig.11, when the flexure is applied on force to produce strain, the resistance changes of R16, R18, R36 and R38 are ΔR16, ΔR18, ΔR36 and ΔR38, the strain is converted into electrical signal, to obtain signal FY. Wherein, signal FY is the force signal along the Y-axis direction shown in Fig.10.

R15, R17, R25, R27, R35, R37, R45 and R47 constitute a bridge circuit as shown in Fig.11, when the flexure is applied on force to produce strain, the resistance changes of R15, R17, R25, R27, R35, R37, R45 and R47 are ΔR15, ΔR17, ΔR25, ΔR27, ΔR35, ΔR37, ΔR45 and ΔR47, the strain is converted into electrical signal, to obtain signal FZ. Wherein, signal FZ is the force signal along the Z-axis direction shown in Fig.10.

R21, R23, R41 and R43 constitute a bridge circuit as shown in Fig.11, when the flexure is applied on force to produce strain, the resistance changes of R21, R23, R41 and R43 are ΔR21, ΔR23, ΔR41 and ΔR43, the strain is converted into electrical signal, to obtain signal MX. Wherein, signal MX is the force torque signal along the X-axis direction shown in Fig.10.

R11, R13, R31 and R33 constitute a bridge circuit as shown in Fig.11, when the flexure is applied on force to produce strain, the resistance changes of R11, R13, R31 and R33 are ΔR11, ΔR13, ΔR31 and ΔR33, the strain is converted into electrical signal, to obtain signal MY. Wherein, signal MY is the force torque signal along the Y-axis direction shown in Fig.10.

R12, R14, R22, R24, R32, R34, R42 and R44 constitute a bridge circuit as shown in Fig.11, when the flexure is applied on force to produce strain, the resistance changes of R12, R14, R22, R24, R32, R34, R42 and R44 are ΔR12, ΔR14, ΔR22, ΔR24, ΔR32, ΔR34, ΔR42 and ΔR44, the strain is converted into electrical signal, to obtain signal MZ. Wherein, signal MZ is the force torque signal along the Z-axis direction shown in Fig.10.

It should be noted that the fourth embodiment provides a method for obtaining six signals FX, FY, FZ, MX, MY and MZ. In practice, one or more strain gages with bridges circuit outputting signals could be reduced, so as to obtain less than six signals to output.

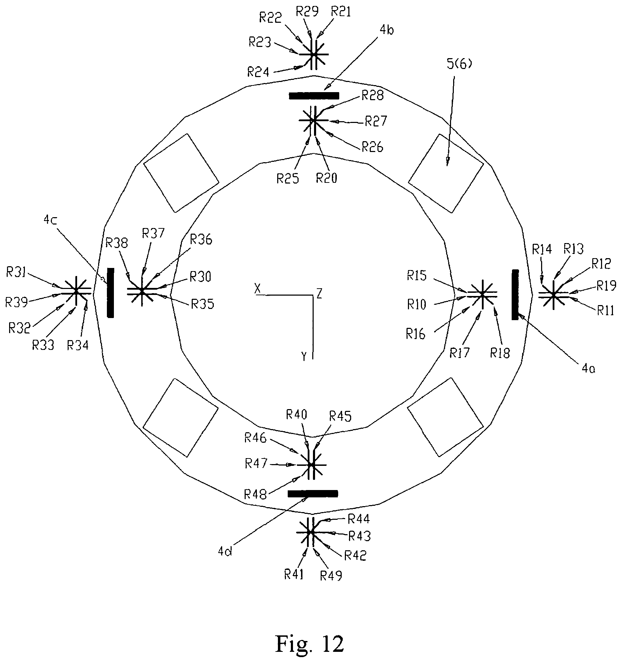

Referring to Fig.12, it is a schematic illustration of the multi-axis loadcell according the fifth embodiment of the present invention.

In the fifth embodiment, five strain gages are arranged on each one of two opposed sides of the force-measuring beam. Four of the strain gages are arranged in the directions of longitudinal, transverse, positive 45° and negative 45° respectively, configured to measure the longitudinal strain, the transverse strain, and the shearing strains of positive 45° and of negative 45° respectively; the other one of the strain gages is arranged in the longitudinal direction, configured to measure the longitudinal strain;

As shown in Fig.12, the multi-axis loadcell includes four force-measuring beams, which are force-measuring beam 4a, force-measuring beam 4b, force-measuring beam 4c and force-measuring beam 4d. Five strain gages are arranged on the front side and the rear side respectively of each force-measuring beams, the detailed is as follow:

Five strain gages are arranged on front side of force-measuring beam 4a, four of the five strain gages are arranged in the directions of longitudinal, transverse, positive 45° and negative 45° respectively, which are strain gages R11, R13, R14 and R12 as shown in Fig. 12; the other one of the five strain gages is arranged in the longitudinal direction, which is strain gage R19 as shown in Fig.12;

Five strain gages are arranged on rear side of force-measuring beam 4a, four of the five strain gages are arranged in the directions of longitudinal, transverse, positive 45° and negative 45° respectively, which are strain gages R15, R17, R18 and R16 as shown in Fig. 12; the other one of the five strain gages is arranged in the longitudinal direction, which is strain gage R10 as shown in Fig.12;

Five strain gages are arranged on front side of force-measuring beam 4b, four of the five strain gages are arranged in the directions of longitudinal, transverse, positive 45° and negative 45° respectively, which are strain gages R21, R23, R24 and R22 as shown in Fig.12; the other one of the five strain gages is arranged in the longitudinal direction, which is strain gage R29 as shown in Fig.12;

Five strain gages are arranged on rear side of force-measuring beam 4b, four of the five strain gages are arranged in the directions of longitudinal, transverse, positive 45° and negative 45° respectively, which are strain gages R25, R27, R28 and R26 as shown in Fig.12; the other one of the five strain gages is arranged in the longitudinal direction, which us strain gage R20 as shown in Fig.12;

Five strain gages are arranged on front side of force-measuring beam 4c, four of the five strain gages are arranged in the directions of longitudinal, transverse, positive 45° and negative 45° respectively, which are strain gages R31, R33, R34 and R32 as shown in Fig.12; the other one of the five strain gages is arranged in the longitudinal direction, which us strain gage R39 as shown in Fig.12;

Five strain gages are arranged on rear side of force-measuring beam 4c, four of the five strain gages are arranged in the directions of longitudinal, transverse, positive 45° and negative 45° respectively, which are strain gages R35, R37, R38 and R36 as shown in Fig.12; the other one of the five strain gages is arranged in the longitudinal direction, which us strain gage R30 as shown in Fig.12;

Five strain gages are arranged on front side of force-measuring beam 4d, four of the five strain gages are arranged in the directions of longitudinal, transverse, positive 45° and negative 45° respectively, which are strain gages R41, R43, R44 and R42 as shown in Fig. 12; the other one of the five strain gages is arranged in the longitudinal direction, which us strain gage R49 as shown in Fig. 12 ;

Five strain gages are arranged on rear side of force-measuring beam 4d, four of the five strain gages are arranged in the directions of longitudinal, transverse, positive 45° and negative 45° respectively, which are strain gages R45, R47, R48 and R46 as shown in Fig. 12; the other one of the five strain gages is arranged in the longitudinal direction, which us strain gage R40 as shown in Fig. 12 ;

In practice, five strain gages arranged on the same side of the force-measuring beam in the directions of longitudinal, transverse, positive 45° and negative 45° respectively could be stacked together or not stacked. The above five strain gages could be replaced by strain rosette.

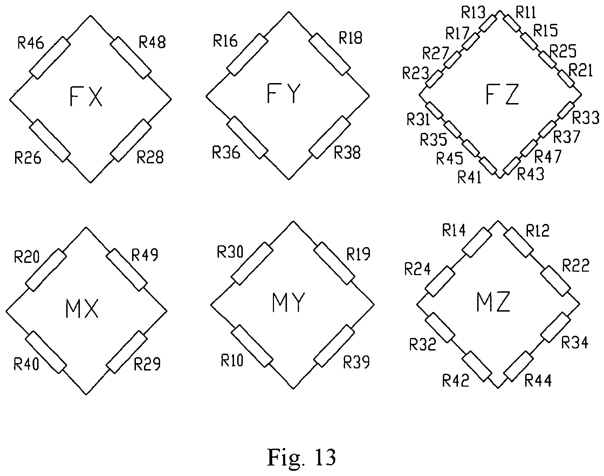

Referring to Fig. 13, it is a schematic illustration of the bridge connections of the strain gage of the multi-axis loadcell according to the fifth embodiment of the present invention.

The fifth embodiment shows bridges circuit design of the strain gage , and there are three force signals FX, FY and FZ, and three force torque output signals MX, MY and MZ are obtained. The detailed is as follow:

R26, R28, R46 and R48 constitute a bridge circuit as shown in Fig.13, when the flexure is applied on force to produce strain, the resistance changes of R26, R28, R46 and R48 are ΔR26, ΔR28, ΔR46 and ΔR48, the strain is converted into electrical signal, to obtain signal FX.

R16, R18, R36 and R38 constitute a bridge circuit as shown in Fig.13, when the flexure is applied on force to produce strain, the resistance changes of R16, R18, R36 and R38 are ΔR16, ΔR18, ΔR36 and ΔR38, the strain is converted into electrical signal, to obtain signal FY.

R11, R13, R15, R17, R21, R23, R25, R27, R31, R33, R35, R37, R41, R43, R45 and R47 constitute a bridge circuit as shown in Fig.13, when the flexure is applied on force to produce strain, the resistance changes of R11, R13, R15, R17, R21, R23, R25, R27, R31, R33, R35, R37, R41, R43, R45 and R47 are Δ R11, ΔR13, ΔR15, ΔR17, ΔR21, ΔR23, ΔR25, ΔR27, ΔR31, ΔR33, Δ R35, ΔR37, ΔR41, ΔR43, ΔR45 and ΔR47, the strain is converted into electrical signal, to obtain signal FZ.

R20, R29, R40 and R49 constitute a bridge circuit as shown in Fig.13, when the flexure is applied on force to produce strain, the resistance changes of R20, R29, R40 and R49 are ΔR20, ΔR29, ΔR40 and ΔR49, the strain is converted into electrical signal, to obtain signal MX.

R10, R19, R30 and R39 constitute a bridge circuit as shown in Fig.13, when the flexure is applied on force to produce strain, the resistance changes of R10, R19, R30 and R39 are ΔR10, ΔR19, ΔR30 and ΔR39, the strain is converted into electrical signal, to obtain signal MY.

R12, R14, R22, R24, R32, R34, R42 and R44 constitute a bridge circuit as shown in Fig.13, when the flexure is applied on force to produce strain, the resistance changes of R12, R14, R22, R24, R32, R34, R42 and R44 are ΔR12 , ΔR14, ΔR22, ΔR24, ΔR32, ΔR34, ΔR42, ΔR44, the strain is converted into electrical signal, to obtain signal MZ.

It should be noted that the fifth embodiment provides a method for obtaining six signals FX, FY, FZ, MX, MY and MZ. In practice, one or more strain gages with bridges circuit outputting signals could be reduced, so as to obtain less than six signals to output.

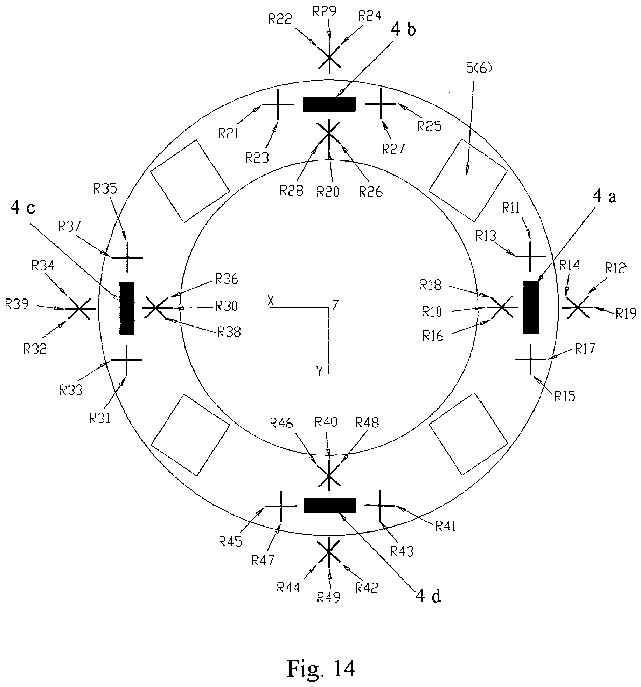

Fig. 14 is a schematic illustration of the multi-axis loadcell according the sixth embodiment of the present invention.

In the sixth embodiment, three strain gages are arranged on each one of two opposed sides of the force-measuring beam. Two of the three strain gages are arranged in the directions positive 45° and negative 45° respectively, configured to measure the shearing strains of positive 45° and of negative 45° respectively; the other one of the strain gages is arranged in the longitudinal direction, configured to measure the longitudinal strain.

Two strain gages are arranged on each one of the other two opposed sides of the force-measuring beam in the directions of longitudinal and transverse respectively, configured to measure the longitudinal strain and transverse strain respectively.

As shown in Fig.14, the multi-axis loadcell includes four force-measuring beams, which are force-measuring beam 4a, force-measuring beam 4b, force-measuring beam 4c and force-measuring beam 4d. Strain gages are arranged on each of four sides respectively of each force-measuring beam, the detailed is as follow:

Strain gages R12, R14 and R19 are arranged on front side of force-measuring beam 4a; strain gages R14 and R12 are arranged in the directions of positive 45° and of negative 45° respectively; strain gage R19 is arranged in the longitudinal direction.

Strain gages R16, R18 and R10 are arranged on rear side of force-measuring beam 4a; strain gages R18 and R16 are arranged in the directions of positive 45° and of negative 45° respectively; strain gage R10 is arranged in the longitudinal direction.

Strain gages R11 and R13 are arranged on left side of force-measuring beam 4a in the longitudinal direction and the transverse direction respectively;

Strain gages R15 and R17 are arranged on right side of force-measuring beam 4a in the longitudinal direction and the transverse direction respectively.

Strain gages R22, R24 and R29 are arranged on front side of force-measuring beam 4b; strain gages R24 and R22 are arranged in the directions of positive 45° and of negative 45° respectively; strain gage R29 is arranged in the longitudinal direction.

Strain gages R26, R28 and R20 are arranged on rear side of force-measuring beam 4b; strain gages R28 and R26 are arranged in the directions of positive 45° and of negative 45° respectively; strain gage R20 is arranged in the longitudinal direction.

Strain gages R21 and R23 are arranged on left side of force-measuring beam 4b in the longitudinal direction and the transverse direction respectively.

Strain gages R25 and R27 are arranged on right side of force-measuring beam 4b in the longitudinal direction and the transverse direction respectively.

Strain gages R32, R34 and R39 are arranged on front side of force-measuring beam 4c; strain gages R34 and R32 are arranged in the directions of positive 45° and of negative 45° respectively; strain gage R39 is arranged in the longitudinal direction.

Strain gages R36, R38 and R30 are arranged on rear side of force-measuring beam 4c; strain gages R38 and R36 are arranged in the directions of positive 45° and of negative 45° respectively; strain gage R30 is arranged in the longitudinal direction.

Strain gages R31 and R33 are arranged on left side of force-measuring beam 4c in the longitudinal direction and the transverse direction respectively.

Strain gages R35 and R37 are arranged on right side of force-measuring beam 4c in the longitudinal direction and the transverse direction respectively.

Strain gages R42, R44 and R49 are arranged on front side of force-measuring beam 4d; strain gages R44 and R42 are arranged in the directions of positive 45° and of negative 45° respectively; strain gage R49 is arranged in the longitudinal direction.

Strain gages R46, R48 and R40 are arranged on rear side of force-measuring beam 4d; strain gages R48 and R46 are arranged in the directions of positive 45° and of negative 45° respectively; strain gage R40 is arranged in the longitudinal direction.

Strain gages R41 and R43 are arranged on left side of force-measuring beam 4d in the longitudinal direction and the transverse direction respectively.

Strain gages R45 and R47 are arranged on right side of force-measuring beam 4d in the longitudinal direction and the transverse direction respectively.

In practice, strain gages arranged on the same side of the force-measuring beam could be stacked together or not stacked. The above two or three strain gages which are arranged on the same side of the force-measuring beam could be replaced by strain rosette.

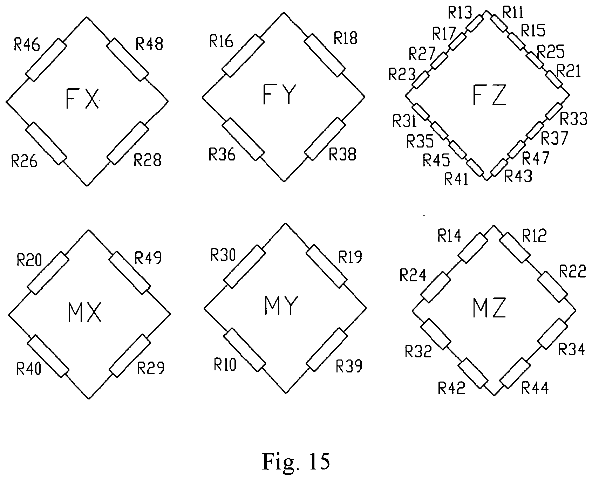

Fig. 15 is a schematic illustration of the bridge connections of the strain gage of the multi-axis loadcell according to the sixth embodiment of the present invention.

The sixth embodiment shows bridges circuit design of the strain gage , and there are three force signals FX, FY and FZ, and three force torque output signals MX, MY and MZ are obtained. The detailed is as follow:

R26, R28, R46 and R48 constitute a bridge circuit as shown in Fig.15, when the flexure is applied on force to produce strain, the resistance changes of R26, R28, R46 and R48 are ΔR26, ΔR28, ΔR46 and ΔR48, the strain is converted into electrical signal, to obtain signal FX.

R16, R18, R36 and R38 constitute a bridge circuit as shown in Fig.15, when the flexure is applied on force to produce strain, the resistance changes of R16, R18, R36 and R38 are ΔR16, ΔR18, ΔR36 and ΔR38, the strain is converted into electrical signal, to obtain signal FY.

R11, R13, R15, R17, R21, R23, R25, R27, R31, R33, R35, R37, R41, R43, R45 and R47 constitute a bridge circuit as shown in Fig.15, when the flexure is applied on force to produce strain, the resistance changes of R11, R13, R15, R17, R21, R23, R25, R27, R31, R33, R35, R37, R41, R43, R45 and R47 are Δ R11, ΔR13, ΔR15, ΔR17, ΔR21, ΔR23, ΔR25, ΔR27, ΔR31, ΔR33, Δ R35, ΔR37, ΔR41, ΔR43, ΔR45 and ΔR47, the strain is converted into electrical signal, to obtain signal FZ.

R20, R29, R40 and R49 constitute a bridge circuit as shown in Fig.15, when the flexure is applied on force to produce strain, the resistance changes of R20, R29, R40 and R49 are ΔR20, ΔR29, ΔR40 and ΔR49, the strain is converted into electrical signal, to obtain signal MX.

R10, R19, R30 and R39 constitute a bridge circuit as shown in Fig.15, when the flexure is applied on force to produce strain, the resistance changes of R10, R19, R30 and R39 are ΔR10, ΔR19, ΔR30 and ΔR39, the strain is converted into electrical signal, to obtain signal MY.

R12, R14, R22, R24, R32, R34, R42 and R44 constitute a bridge circuit as shown in Fig.15, when the flexure is applied on force to produce strain, the resistance changes of R12, R14, R22, R24, R32, R34, R42 and R44 are ΔR12 , ΔR14, ΔR22, ΔR24, ΔR32, ΔR34, ΔR42, ΔR44, the strain is converted into electrical signal, to obtain signal MZ.

It should be noted that the sixth embodiment provides a method for obtaining six signals FX, FY, FZ, MX, MY and MZ. In practice, one or more strain gages with bridges circuit outputting signals could be reduced, so as to obtain less than six signals to output.

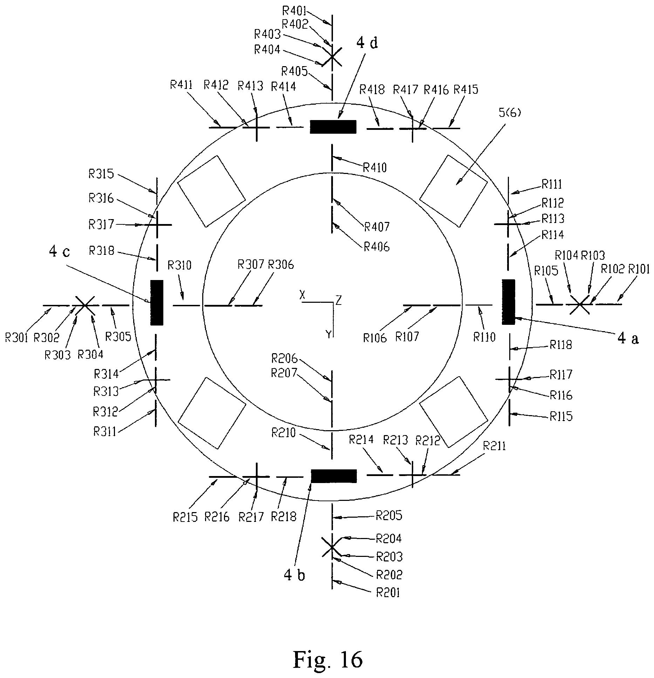

Fig. 16 is a schematic illustration of the multi-axis loadcell according the seventh embodiment of the present invention.

According to the multi-axis loadcell of the seventh embodiment, four strain gages are arranged on each one of two opposed sides of the force-measuring beam; two of the strain gages are arranged on an upper portion and a lower portion of the force-measuring beam in the longitudinal direction, configured to measure longitudinal strain of the upper portion and the lower portion of the force-measuring beam; the other two of the strain gages are arranged in the middle portion of the force-measuring beam in the longitudinal direction and transverse direction, configured to measure longitudinal strain and the transverse strain of the middle portion of the force-measuring beam;

five strain gages are arranged on one of the other two opposed sides of the force-measuring beam; three of the five strain gages are arranged on an upper portion, a middle portion and a lower portion of the force-measuring beam in the longitudinal direction, configured to measure longitudinal strain of the upper portion, the middle portion and the lower portion; the other two of the five strain gages are arranged on the middle portion of the force-measuring beam in the positive 45° direction and the negative 45° direction, configured to measure the shearing strains of positive 45° and of negative 45° of the middle portion of the force-measuring beam; three strain gages are arranged on an upper portion, a middle portion and a lower portion in the longitudinal direction on the other one of the two opposed sides, configured to measure longitudinal strain of the upper portion, the middle portion and the lower portion of the force-measuring beam.

As shown in Fig.16, the multi-axis loadcell includes four force-measuring beams, which are force-measuring beam 4a, force-measuring beam 4b, force-measuring beam 4c and force-measuring beam 4d. Strain gages are arranged on the each of four sides respectively of each force-measuring beam, the detailed is as follow:

Strain gages R101, R102, R103, R104 and R105 are arranged on front side of force-measuring beam 4a; strain gages R101, R102 and R105 are arranged on an upper portion, a middle portion and a lower portion of the front side in the longitudinal direction; strain gages R104 and R103 are arranged in the middle portion of the front side in the directions of positive 45° and of negative 45° respectively.

Strain gages R110, R107 and R106 are arranged on an upper portion, a middle portion and a lower portion of rear side of force-measuring beam 4a;

Strain gages R111, R112, R113 and R114 are arranged on left side of force-measuring beam 4a; strain gages R114 and Rill are arranged on an upper portion and a lower portion of the left side in the longitudinal direction; strain gages R112 and R113 are arranged in the middle portion of the left side in the longitudinal direction and in the transverse direction.

Strain gages R115, R116, R117 and R118 are arranged on right side of force-measuring beam 4a; strain gages R118 and R115 are arranged on an upper portion and a lower portion of the right side in the longitudinal direction; strain gages R116 and R117 are arranged in the middle portion of the right side in the longitudinal direction and in the transverse direction.

Strain gages R201, R202, R203, R204 and R205 are arranged on front side of force-measuring beam 4b; strain gages R205, R202 and R201 are arranged on an upper portion, a middle portion and a lower portion of the front side in the longitudinal direction; strain gages R204 and R203 are arranged in the middle portion of the front side in the directions of positive 45° and of negative 45° respectively.

Strain gages R210, R207 and R206 are arranged on an upper portion, a middle portion and a lower portion of rear side of force-measuring beam 4b;

Strain gages R211, R212, R213 and R214 are arranged on left side of force-measuring beam 4b; strain gages R214 and R211 are arranged on an upper portion and a lower portion of the left side in the longitudinal direction; strain gages R212 and R213 are arranged in the middle portion of the left side in the longitudinal direction and in the transverse direction.

Strain gages R215, R216, R217 and R218 are arranged on right side of force-measuring beam 4b; strain gages R218 and R215 are arranged on an upper portion and a lower portion of the right side in the longitudinal direction; strain gages R216 and R217 are arranged in the middle portion of the right side in the longitudinal direction and in the transverse direction.

Strain gages R301, R302, R303, R304 and R305 are arranged on front side of force-measuring beam 4c; strain gages R305, R302 and R301 are arranged on an upper portion, a middle portion and a lower portion of the front side in the longitudinal direction; strain gages R304 and R303 are arranged in the middle portion of the front side in the directions of positive 45° and of negative 45° respectively.

Strain gages R310, R307 and R306 are arranged on an upper portion, a middle portion and a lower portion of rear side of force-measuring beam 4c;

Strain gages R311, R312, R313 and R314 are arranged on left side of force-measuring beam 4c; strain gages R314 and R311 are arranged on an upper portion and a lower portion of the left side in the longitudinal direction; strain gages R312 and R313 are arranged in the middle portion of the left side in the longitudinal direction and in the transverse direction.

Strain gages R315, R316, R317 and R318 are arranged on right side of force-measuring beam 4c; strain gages R318 and R315 are arranged on an upper portion and a lower portion of the right side in the longitudinal direction; strain gages R316 and R317 are arranged in the middle portion of the right side in the longitudinal direction and in the transverse direction.

Strain gages R401, R402, R403, R404 and R405 are arranged on front side of force-measuring beam 4d; strain gages R405, R402 and R401 are arranged on an upper portion, a middle portion and a lower portion of the front side in the longitudinal direction; strain gages R404 and R403 are arranged in the middle portion of the front side in the directions of positive 45° and of negative 45° respectively.

Strain gages R410, R407 and R406 are arranged on an upper portion, a middle portion and a lower portion of rear side of force-measuring beam 4d;

Strain gages R411, R412, R413 and R414 are arranged on left side of force-measuring beam 4d; strain gages R414 and R411 are arranged on an upper portion and a lower portion of the left side in the longitudinal direction; strain gages R412 and R413 are arranged in the middle portion of the left side in the longitudinal direction and in the transverse direction.

Strain gages R415, R416, R417 and R418 are arranged on right side of force-measuring beam 4d; strain gages R418 and R415 are arranged on an upper portion and a lower portion of the right side in the longitudinal direction; strain gages R416 and R417 are arranged in the middle portion of the right side in the longitudinal direction and in the transverse direction.

In practice, two strain gages arranged on the same side of the force-measuring beam in the directions of positive 45° and negative 45° respectively could be stacked together or not stacked; two strain gages arranged on the same side of the force-measuring beam in the directions of longitudinal and of transverse respectively could be stacked together or not stacked. The above strain gages could be replaced by strain rosette.

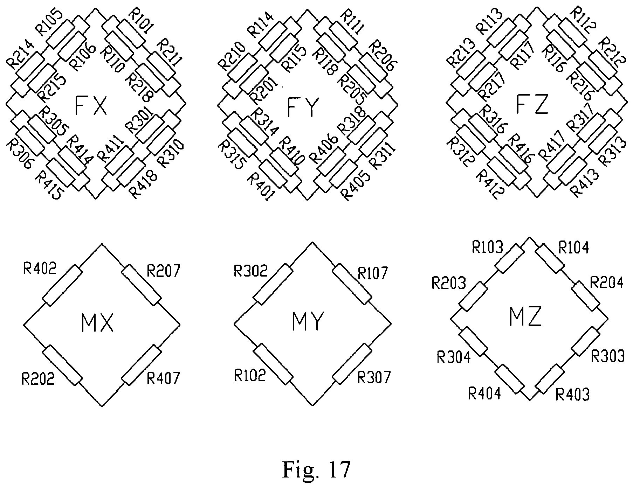

Fig. 17 is a schematic illustration of the bridge connections of the strain gage of the multi-axis loadcell according to the seventh embodiment of the present invention.

The seventh embodiment shows bridges circuit design of the strain gage, and there are three force signals FX, FY and FZ, and three force torque output signals MX, MY and MZ are obtained. The detailed is as follow:

R105, R106, R214, R215, R301, R310, R411, R418, R101, R110, R211, R218, R305, R306, R414 and R415 constitute a bridge circuit as shown in Fig.17, when the flexure is applied on force to produce strain, the resistance changes of R105, R106, R214, R215, R301, R310, R411, R418, R101, R110, R211, R218, R305, R306, R414 and R415 are ΔR105,ΔR106,ΔR214,ΔR215,ΔR301,ΔR310,ΔR411,ΔR418,ΔR101,ΔR110, ΔR211,ΔR218,ΔR305,ΔR306, ΔR414 and ΔR415, the strain is converted into electrical signal, to obtain signal FX.

R114, R115, R201, R210, R311, R318, R405, R406, R111, R118, R205, R206, R314, R315, R410 and R401 constitute a bridge circuit as shown in Fig.17, when the flexure is applied on force to produce strain, the resistance changes of R114, R115, R201, R210, R311, R318, R405, R406, R111, R118, R205, R206, R314, R315, R410 and R401 are ΔR114,ΔR115,ΔR201,ΔR210,ΔR311,ΔR318,ΔR405,ΔR406,ΔR111,ΔR118,ΔR205,ΔR206,ΔR314,ΔR315,ΔR410 and ΔR401, the strain is converted into electrical signal, to obtain signal FY.

R113, R117, R213, R217, R313, R317, R413,, R417, R112, R116, R212, R216, R312, R316, R412 and R416 constitute a bridge circuit as shown in Fig.17, when the flexure is applied on force to produce strain, the resistance changes of R113, R117, R213, R217, R313, R317, R413,, R417, R112, R116, R212, R216, R312, R316, R412 and R416 are ΔR113, ΔR117, ΔR213, Δ R217, ΔR313, ΔR317, ΔR413, ΔR417, ΔR112, ΔR116, ΔR212, ΔR216, ΔR312, ΔR316, ΔR412 and ΔR416, the strain is converted into electrical signal, to obtain signal FZ.

R202, R207, R402 and R407 constitute a bridge circuit as shown in Fig.17, when the flexure is applied on force to produce strain, the resistance changes of R202, R207, R402 and R407 are ΔR202, ΔR207, ΔR402 and Δ R407, the strain is converted into electrical signal, to obtain signal MX.

R102, R107, R302 and R307 constitute a bridge circuit as shown in Fig.17, when the flexure is applied on force to produce strain, the resistance changes of R102, R107, R302 and R307 are ΔR102, ΔR107, ΔR302 and Δ R307, the strain is converted into electrical signal, to obtain signal MY.

R103, R104, R203, R204, R303, R304, R403 and R404 constitute a bridge circuit as shown in Fig.17, when the flexure is applied on force to produce strain, the resistance changes of R103, R104, R203, R204, R303, R304, R403 and R404 are ΔR103, ΔR104, ΔR203, ΔR204, ΔR303, ΔR304, ΔR403 and Δ R404, the strain is converted into electrical signal, to obtain signal MZ.

It should be noted that the seventh embodiment provides a method for obtaining six signals FX, FY, FZ, MX, MY and MZ. In practice, one or more strain gages with bridges circuit outputting signals could be reduced, so as to obtain less than six signals to output.

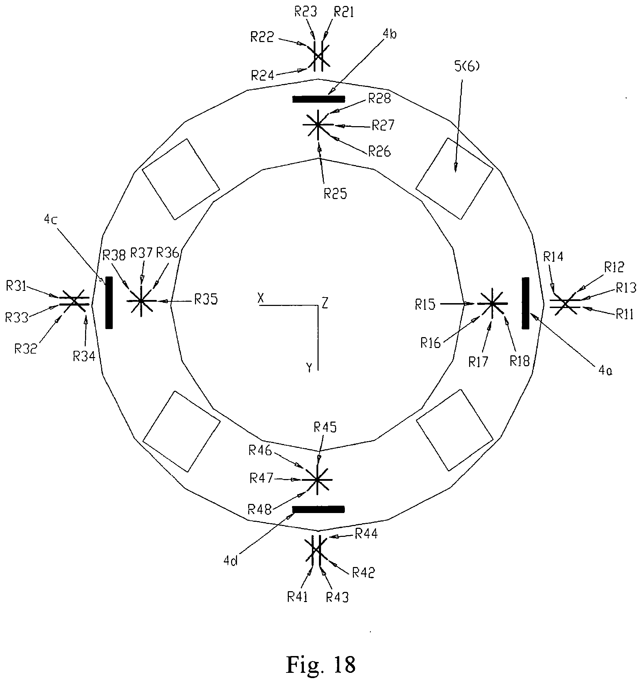

Fig. 18 is a schematic illustration of the multi-axis loadcell according the eighth embodiment of the present invention.

According to the multi-axis loadcell of the eighth embodiment, four strain gages are arranged on one of two opposed sides of the force-measuring beam respectively in the directions of longitudinal, transverse, positive 45° and negative 45°, configured to measure the strains in longitudinal and transverse directions, and shearing strains in positive 45° and negative 45° directions;

four strain gages are arranged on the other one of two opposed sides of the force-measuring beam respectively, two of the strain gages are arranged in longitudinal direction, configured to measure the longitudinal strain; the other two of the strain gages are arranged in the directions positive 45° and negative 45°, configured to measure the shearing strains of positive 45° and negative 45°.

As shown in Fig.18, the multi-axis loadcell includes four force-measuring beams, which are force-measuring beam 4a, force-measuring beam 4b, force-measuring beam 4c and force-measuring beam 4d. Strain gages are arranged on the each of front side and rear side of each force-measuring beam, the detailed is as follow:

Four strain gages are arranged on front side of force-measuring beam 4a; two strain gages R11 and R13 are arranged in the longitudinal direction as shown in Fig.18; the other two strain gages R14 and R12 are arranged in the directions of positive 45° and of negative 45° respectively as shown in Fig.18.

Four strain gages R15, R17, R18 and R16 are arranged on rear side of force-measuring beam 4a in the directions of longitudinal, transverse and positive 45° and negative 45° respectively as shown in Fig.18.

Four strain gages are arranged on front side of force-measuring beam 4b; two strain gages R21 and R23 are arranged in the longitudinal direction as shown in Fig.18; the other two strain gages R24 and R22 are arranged in the directions of positive 45° and of negative 45° respectively as shown in Fig.18.

Four strain gages R25, R27, R28 and R26 are arranged on rear side of force-measuring beam 4b in the directions of longitudinal, transverse and positive 45° and negative 45° respectively as shown in Fig.18.

Four strain gages are arranged on front side of force-measuring beam 4c; two strain gages R31 and R33 are arranged in the longitudinal direction as shown in Fig.18; the other two strain gages R34 and R32 are arranged in the directions of positive 45° and of negative 45° respectively as shown in Fig.18.

Four strain gages R35, R37, R38 and R36 are arranged on rear side of force-measuring beam 4c in the directions of longitudinal, transverse and positive 45° and negative 45° respectively as shown in Fig.18.

Four strain gages are arranged on front side of force-measuring beam 4d; two strain gages R41 and R43 are arranged in the longitudinal direction as shown in Fig.18; the other two strain gages R44 and R42 are arranged in the directions of positive 45° and of negative 45° respectively as shown in Fig.18.

Four strain gages R45, R47, R48 and R26 are arranged on rear side of force-measuring beam 4d in the directions of longitudinal, transverse and positive 45° and negative 45° respectively as shown in Fig.18.

In practice, four strain gages arranged on the same side of the force-measuring beam could be stacked together or not stacked. The above strain gages arranged on the same side of the force-measuring beam could be replaced by strain rosette.

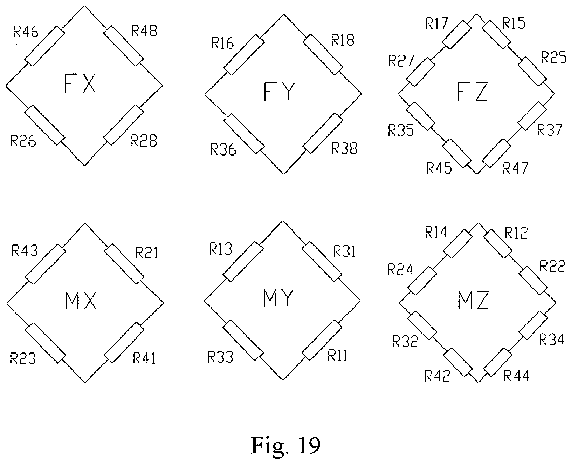

Fig. 19 is a schematic illustration of the bridge connections of the strain gage of the multi-axis loadcell according to the eighth embodiment of the present invention.

The eighth embodiment shows bridges circuit design of the strain gage, and there are three force signals FX, FY and FZ, and three force torque output signals MX, MY and MZ are obtained. The detailed is as follow:

R26, R28, R46 and R48 constitute a bridge circuit as shown in Fig.19, when the flexure is applied on force to produce strain, the resistance changes of R26, R28, R46 and R48 are ΔR26, ΔR28, ΔR46 and ΔR48, the strain is converted into electrical signal, to obtain signal FX.

R16, R18, R36 and R38 constitute a bridge circuit as shown in Fig.19, when the flexure is applied on force to produce strain, the resistance changes of R16, R18, R36 and R38 are ΔR16, ΔR18, ΔR36 and ΔR38, the strain is converted into electrical signal, to obtain signal FY.

R15, R17, R25, R27, R35, R37, R45 and R47, constitute a bridge circuit as shown in Fig.19, when the flexure is applied on force to produce strain, the resistance changes of R15, R17, R25, R27, R35, R37, R45 and R47 are ΔR15, ΔR17, ΔR25, ΔR27, ΔR35, ΔR37, ΔR45 and ΔR47, the strain is converted into electrical signal, to obtain signal FZ.

R21, R23, R41 and R43 constitute a bridge circuit as shown in Fig.19, when the flexure is applied on force to produce strain, the resistance changes of R21, R23, R41 and R43 are ΔR21, ΔR23, ΔR41 and ΔR43, the strain is converted into electrical signal, to obtain signal MX.

R11, R13, R31 and R33 constitute a bridge circuit as shown in Fig.19, when the flexure is applied on force to produce strain, the resistance changes of R11, R13, R31 and R33 are ΔR11, ΔR13, ΔR31 and ΔR33, the strain is converted into electrical signal, to obtain signal MY.

R12, R14, R22, R24, R32, R34, R42 and R44 constitute a bridge circuit as shown in Fig.19, when the flexure is applied on force to produce strain, the resistance changes of R12, R14, R22, R24, R32, R34, R42 and R44 are ΔR12, ΔR14, ΔR22, ΔR24, ΔR32, ΔR34, ΔR42 and ΔR44, the strain is converted into electrical signal, to obtain signal MZ.

It should be noted that the eighth embodiment provides a method for obtaining six signals FX, FY, FZ, MX, MY and MZ. In practice, one or more strain gages with bridges circuit outputting signals could be reduced, so as to obtain less than six signals to output.

The multi-axis loadcells according to the embodiments of the present invention have the advantages as bellow:

1. The multi-axis loadcell according to the present invention includes a flexure and strain gages, with the strain gages being arranging on the force-measuring beams. When the multi-axis loadcell is applied on force, the flexure produces strain, and converts the strain into electrical signal to output. This multi-axis loadcell allows for convenient installment, and is characteristic of simple construction, could achieve not only structure decoupling but also algorithm decoupling, and enables to measure the force signal value and torque signal value which are applied onto the transducer.

2. The multi-axis loadcell of the present invention is equipped with top supports and bottom supports which are engaged with each other correspondingly, adapted for serving the function of overload protection, avoiding damaging the transducer, and adjusting to the extreme and complicated operation demand.

## Claims

1. A multi-axis loadcell, comprising:
a flexure (1);
wherein the flexure (1) comprising an upper member (2), a lower member (3) and at least three force-measuring beams (4); each of the force-measuring beams (4) having a rectangle-shaped cross section and being arranged between the upper member (2) and the lower member (3) with its upper end connected to the upper member (2) and its lower end connected to the lower member (3);
the force-measuring beam (4) comprising a front side, a rear side opposite to the front side, a left side and a right side opposite to the left side;
the multi-axis loadcell further comprising at least four strain gages, each of which is arranged on a surface of the side of the force-measuring beam (4), for measuring longitudinal strain, transverse strain, shearing strains of positive 45° and negative 45° simultaneously;
wherein at least two strain gages being respectively arranged in middle of a same side surface of the force-measuring beam (4) in the longitudinal and transverse directions for measuring longitudinal strain and transverse strain; while at least two strain gages being respectively arranged in middle of a same side surface of the force-measuring beam (4) in the positive 45° direction and negative 45° direction, for measuring the shearing strains of positive 45° and of negative 45°,
**characterized in that**:
a plurality of top supports (5) extend from the lower end of the upper member (2), while a plurality of bottom supports (6) extend from the upper end of the lower member (3); the top support (5) is correspondingly configured to engage with the bottom support (6) to form a junction with a gap (7) formed therein in such a way that when a relative displacement is caused between the top support (2) and the bottom support (3) to narrow the gap, the top support (5) and the bottom support (6) are contacting each other to form a mutual limitation for each other.

2. The multi-axis loadcell according to claim 1, wherein the at least four strain gages are respectively arranged in middle of a same side surface of the force-measuring beam (4) in the directions of longitudinal, transverse, positive 45° and negative 45° for measuring the longitudinal strain, the transverse strain, and the shearing strains of positive 45° and of negative 45° respectively.

3. The multi-axis loadcell according to claim 2, wherein the four strain gages are arranged on each of two opposed sides of the force-measuring beam (4) respectively; said strain gages are respectively arranged in the directions of longitudinal, transverse, positive 45° and negative 45° for measuring the longitudinal strain, the transverse strain, and the shearing strains of positive 45° and of negative 45° respectively.

4. The multi-axis loadcell according to claim 2, wherein five strain gages are arranged on each of two opposed sides of the force-measuring beam (4) respectively; and four of said strain gages are respectively arranged in the directions of longitudinal, transverse, positive 45° and negative 45° for measuring the longitudinal strain, the transverse strain, and the shearing strains of positive 45° and of negative 45° respectively; the other one of said strain gages is arranged in the longitudinal direction for measuring the longitudinal strain.

5. The multi-axis loadcell according to claim 2, wherein the force-measuring beam (4) has two opposed sides, four strain gages are respectively arranged on one of the opposed sides in the directions of longitudinal, transverse, positive 45° and negative 45° for measuring the longitudinal strain, the transverse strain and the shearing strains of positive 45° and of negative 45° respectively; and
another four strain gages are arranged on the other one of the opposed sides, two of said strain gages are arranged in the longitudinal directions for measuring the longitudinal strain; the other two of said strain gages are arranged in positive 45° direction and negative 45° direction for measuring the shearing strains of positive 45° and of negative 45° respectively.

6. The multi-axis loadcell according to claim 1, wherein three strain gages are arranged on each of two opposed sides of the force-measuring beam (4) respectively; two of the strain gages are arranged in positive 45° direction and negative 45° direction for measuring the shearing strains of positive 45° and of negative 45° respectively; and the other one of the strain gages is arranged in the longitudinal direction for measuring the longitudinal strain;
another two strain gages are arranged on each of the other two opposed sides of the force-measuring beam (4) respectively in the longitudinal direction and the transverse direction for measuring the longitudinal strain and the transverse strain respectively.

7. The multi-axis loadcell according to claim 1, wherein four strain gages are arranged on each of two opposed sides of the force-measuring beam (4) respectively; two of said strain gages are respectively arranged on an upper portion and a lower portion of the force-measuring beam (4) in the longitudinal direction for measuring longitudinal strain of the upper portion and the lower portion of the force-measuring beam (4); and the other two of said strain gages are respectively arranged in the middle portion of the force-measuring beam (4) in the longitudinal direction and transverse direction for measuring longitudinal strain and the transverse strain of the middle portion of the force-measuring beam (4); and
five strain gages are arranged on one of the other two opposed sides of the force-measuring beam (4); three of the five strain gages are arranged on an upper portion, a middle portion and a lower portion of the force-measuring beam (4) in the longitudinal direction for measuring longitudinal strain of the upper portion, the middle portion and the lower portion; the other two of the five strain gages are arranged on the middle portion of the force-measuring beam (4) in the positive 45° direction and the negative 45° direction for measuring the shearing strains of positive 45° and of negative 45° of the middle portion of the force-measuring beam (4); another three strain gages are respectively arranged on an upper portion, a middle portion and a lower portion in the longitudinal direction on the other one of the two opposed sides for measuring longitudinal strains of the upper portion, the middle portion and the lower portion of the force-measuring beam (4).

8. The multi-axis loadcell according to claim 1, wherein two strain gages are arranged on each one of two opposed sides of the force-measuring beam (4) respectively in the positive 45° direction and the negative 45° direction for measuring the shearing strains of positive 45° and of negative 45° thereof; and
two strain gages are arranged on the other two opposed sides of the force-measuring beam (4) in the longitudinal direction and the transverse direction for measuring longitudinal strain and the transverse strain thereof.

9. The multi-axis loadcell according to claim 1, wherein two strain gages are arranged on one side of the force-measuring beam (4) in the positive 45° direction and the negative 45° direction for measuring the shearing strains of positive 45° and of negative 45° thereof; and another two strain gages are arranged on the opposed side of the force-measuring beam (4) in the longitudinal direction and the transverse direction for measuring longitudinal strain and the transverse strain thereof.

10. The multi-axis loadcell according to claim 1, wherein both of the number of the top support (5) and the number of the bottom support (6) are larger than or equal to three.

11. The multi-axis loadcell according to claim 10, wherein a plate (10) is inserted into the gap (7) of the junction formed by the top support (5) and the bottom support (6).

12. The multi-axis loadcell according to claim 1, wherein a groove (8) is formed in the upper member (2) above the junction of the force-measuring beam (4) and the upper member (2); and another groove (9) is formed in the lower member (3) below the junction of the force-measuring beam (4) and the lower member (3).

## Patentansprüche

1. Mehrachsige Kraftmesszelle, umfassend:
ein Biegeelement (1);
wobei das Biegeelement (1) ein oberes Element (2), ein unteres Element (3) und mindestens drei Kraftmessbalken (4) umfasst; wobei jeder der Kraftmessbalken (4) einen rechteckförmigen Querschnitt aufweist und zwischen dem oberen Element (2) und dem unteren Element (3) angeordnet ist, wobei sein oberes Ende mit dem oberen Element (2) verbunden ist und sein unteres Ende mit dem unteren Teil (3) verbunden ist;
der Kraftmessbalken (4) umfassend eine Vorderseite, eine Rückseite gegenüber der Vorderseite, eine linke Seite und eine rechte Seite gegenüber der linken Seite;
wobei die mehrachsige Kraftmesszelle ferner mindestens vier Dehnungsmesstreifen umfasst, von denen jeder an einer Oberfläche der Seite des Kraftmessbalkens (4) angeordnet ist, um Längsdehnung, Querdehnung, Scherdehnungen von positivem 45°- und negativem 45°-Grad gleichzeitig zu messen;
wobei mindestens zwei Dehnungsmesstreifen jeweils in der Mitte einer gleichen Seitenfläche des Kraftmessbalkens (4) in Längs- und Querrichtung zum Messen der Längs- und Querdehnung angeordnet sind; während mindestens zwei Dehnungsmesstreifen jeweils in der Mitte einer gleichen Seitenfläche des Kraftmessbalkens (4) in positiver 45°-Richtung und negativer 45°-Richtung angeordnet sind, um die Scherspannungen von positivem 45°-Grad und negativem 45°-Grad zu messen,
**dadurch gekennzeichnet, dass**
eine Vielzahl von oberen Stützen (5) sich von dem unteren Ende des oberen Teils (2) erstreckt, während eine Mehrzahl von unteren Stützen (6) sich von dem oberen Ende des unteren Teils (3) erstreckt; der obere Träger (5) entsprechend konfiguriert ist, um mit der unteren Stütze (6) in Eingriff zu treten, um eine Verbindung mit einem darin ausgebildeten Spalt (7) derart zu bilden, dass eine relative Verschiebung zwischen der oberen Stütze (2) und der unteren Stütze (3) bewirkt wird, um den Spalt zu verengen, wobei die obere Stütze (5) und die untere Stütze (6) einander berühren, um eine gegenseitige Begrenzung für einander zu bilden.

2. Mehrachsige Kraftmesszelle nach Anspruch 1, wobei die mindestens vier Dehnungsmesstreifen jeweils in der Mitte einer gleichen Seitenfläche des Kraftmessbalkens (4) in den Längs-, Quer-, positiven 45°- und negativen 45°-Richtungen angeordnet sind, um die Längsdehnung, die Querspannung und die Scherspannungen von positivem 45°-Grad bzw. von negativem 45°-Grad zu messen.

3. Mehrachsige Kraftmesszelle nach Anspruch 2, wobei die vier Dehnungsmesstreifen jeweils auf zwei gegenüberliegenden Seiten des Kraftmessbalkens (4) angeordnet sind; diese Dehnungsmeßstreifen jeweils in den Längs-, Quer-, positiven 45°- und negativen 45°-Richtungen angeordnet sind, um die Längsspannung, die Querspannung und die Scherspannungen von positivem 45°-Grad bzw. negativem 45°-Grad zu messen.

4. Mehrachsige Kraftmesszelle nach Anspruch 2, wobei die fünf Dehnungsmesstreifen jeweils auf zwei gegenüberliegenden Seiten des Kraftmessbalkens (4) angeordnet sind; und vier Dehnungsmeßstreifen jeweils in den Längs-, Quer-, positiven 45°- und negativen 45°-Richtungen angeordnet sind, um die Längsspannung, die Querspannung und die Scherspannungen von positivem 45°-Grad bzw. negativem 45°-Grad zu messen; wobei der andere der Dehnungsmesstreifen in Längsrichtung zum Messen der Längsdehnung angeordnet ist.

5. Mehrachsige Kraftmesszelle nach Anspruch 2, wobei der Kraftmessbalken (4) zwei gegenüberliegende Seiten aufweist, wobei jeweils vier Dehnungsmesstreifen auf einer der gegenüberliegenden Seiten in den Längs-, Quer-, positiven 45°- und negativen 45°-Richtungen angeordnet sind, um die Längsdehnung, die Querspannung und die Scherspannungen von positivem 45°-Grad bzw. von negativem 45°-Grad zu messen; und
weitere vier Dehnungsmesstreifen auf der gegenüberliegenden Seite angeordnet sind, wobei zwei Dehnungsmesstreifen in Längsrichtung zum Messen der Längsdehnung angeordnet sind; die weiteren zwei der Dehnungsmesstreifen sind in positiver 45°-Richtung und negativer 45°-Richtung angeordnet, um die Scherspannungen von positiven 45°-Grad bzw. negativen 45°-Grad zu messen.

6. Mehrachsige Kraftmesszelle nach Anspruch 1, wobei drei Dehnungsmesstreifen jeweils auf jeder von zwei gegenüberliegenden Seiten des Kraftmessbalkens (4) angeordnet sind; zwei der Dehnungsmesstreifen jeweils in den Längs-, Quer-, positiven 45°- und negativen 45°-Richtungen angeordnet sind, um die Scherspannungen von positiven 45°-Grad bzw. negativen 45°-Grad zu messen; und der andere der Dehnungsmesstreifen zur Messung der Scherspannungen in der Längsrichtung angeordnet ist;
zwei weitere Dehnungsmesstreifen sind auf jeder der beiden anderen gegenüberliegenden Seiten des Kraftmessbalkens (4) jeweils in der Längsrichtung und der Querrichtung angeordnet, um die Längsdehnung bzw. die Querdehnung zu messen.

7. Mehrachsige Kraftmesszelle nach Anspruch 1, wobei vier Dehnungsmesstreifen jeweils auf jeder der beiden gegenüberliegenden Seiten des Kraftmessbalkens (4) angeordnet sind; zwei dieser Dehnungsmesstreifen jeweils auf einem oberen Teil und einem unteren Teil des Kraftmessbalkens (4) in Längsrichtung zum Messen der Längsdehnung des oberen Teils und des unteren Teils des Kraftmessbalkens (4) angeordnet sind; und die beiden anderen der Dehnungsmesstreifen jeweils in dem mittleren Teil des Kraftmessbalkens (4) in der Längsrichtung und Querrichtung zum Messen der Längsspannung und der Querdehnung des Mittelabschnitts des Kraftmessbalkens (4) angeordnet sind; und.
fünf Dehnungsmesstreifen sind auf einer der beiden anderen gegenüberliegenden Seiten des Kraftmessbalkens (4) angeordnet; drei der fünf Dehnungsmesstreifen sind auf einem oberen Teil, einem mittleren Teil und einem unteren Teil des Kraftmessbalkens (4) in Längsrichtung zum Messen der Längsdehnung des oberen Teils, des mittleren Teils und des unteren Teils angeordnet; die zwei weiteren der fünf Dehnungsmesstreifen sind auf dem mittleren Teil des Kraftmessbalkens (4) in der positiven 45°-Richtung und der negativen 45°-Richtung angeordnet, um die Scherspannungen von positiven 45°-Grad und von negativen 45°-Grad des mittleren Teils des Kraftmessbalkens (4) zu messen; drei weitere Dehnungsmesstreifen sind jeweils auf einem oberen Teil, einem mittleren Teil und einem unteren Teil in Längsrichtung auf der anderen der beiden gegenüberliegenden Seiten angeordnet, um Längsdehnungen des oberen Teils, des mittleren Teils und des unteren Teils des Kraftmessbalkens (4) zu messen.

8. Mehrachsige Kraftmesszelle nach Anspruch 1, wobei zwei Dehnungsmesstreifen jeweils auf jeder von zwei gegenüberliegenden Seiten des Kraftmessbalkens (4) jeweils in den positiven 45°- und negativen 45°-Richtungen angeordnet sind, um die Scherspannungen von positiven 45°-Grad bzw. negativen 45°-Grad davon zu messen; und
zwei weitere Dehnungsmesstreifen sind auf der beiden anderen gegenüberliegenden Seiten des Kraftmessbalkens (4) jeweils in der Längsrichtung und der Querrichtung angeordnet, um die Längsdehnung bzw. die Querdehnung davon zu messen.

9. Mehrachsige Kraftmesszelle nach Anspruch 1, wobei zwei Dehnungsmesstreifen jeweils auf jeder von zwei gegenüberliegenden Seiten des Kraftmessbalkens (4) jeweils in den positiven 45°- und negativen 45°-Richtungen angeordnet sind, um die Scherspannungen von positiven 45°-Grad bzw. negativen 45°-Grad zu messen;
und zwei weitere Dehnungsmesstreifen sind auf der gegenüberliegenden Seiten des Kraftmessbalkens (4) jeweils in der Längsrichtung und der Querrichtung angeordnet, um die Längsdehnung bzw. die Querdehnung davon zu messen.

10. Mehrachsige Kraftmesszelle nach Anspruch 1, wobei sowohl die Anzahl der oberen Stütze (5) als auch die Anzahl der unteren Stütze (6) größer als oder gleich drei ist.

11. Mehrachsige Kraftmesszelle nach Anspruch 10, wobei eine Platte (10) in den Spalt (7) der durch die obere Stütze (5) und die untere Stütze (6) gebildeten Verbindung eingefügt ist.

12. Mehrachsige Kraftmesszelle nach Anspruch 1, wobei eine Rille (8) in dem oberen Element (2) über der Verbindung des Kraftmessbalkens (4) und des oberen Elements (2) ausgebildet ist; und eine weitere Rille (9) im unteren Element (3) unterhalb der Verbindung des Kraftmessbalkens (4) und des unteren Teils (3) ausgebildet ist.

## Revendications

1. Cellule de charge multiaxiale, comprenant:
un élément de flexion (1);
dans lequel l'élément de flexion (1) comprend un élément supérieur (2), un élément inférieur (3) et au moins trois faisceaux de mesure de force (4); chacune des faisceaux de mesure de force (4) ayant une section transversale en forme de rectangle et étant disposés entre l'élément supérieur (2) et l'élément inférieur (3), son extrémité supérieure étant connectée à l'élément supérieur (2) et son extrémité inférieure étant connectée à l'élément inférieur (3);
le faisceau de mesure de force (4) comprenant un côté avant, un côté arrière opposé au côté avant, un côté gauche et un côté droit opposé au côté gauche;
la cellule de charge multiaxiale comprenant en outre au moins quatre jauges de contrainte, chacune étant disposée sur une surface du côté du faisceau de mesure de force (4), pour mesurer une contrainte longitudinale, une contrainte transversale, des contraintes de cisaillement positives à 45° et négatives 45° simultanément;
dans lequel au moins deux jauges de contrainte sont respectivement disposées au milieu d'une même surface latérale du faisceau de mesure de force (4) dans les directions longitudinale et transversale pour mesurer la contrainte longitudinale et la contrainte transversale; tandis que deux jauges de contrainte au moins sont respectivement disposées au milieu d'une même surface latérale du faisceau de mesure de force (4) dans les directions positive de 45° et négative de 45°, pour mesurer les contraintes de cisaillement positive à 45° et négative à 45°,
**caractérisé en ce que**:
une pluralité de supports supérieurs (5) s'étend depuis l'extrémité inférieure de l'élément supérieur (2), tandis qu'une pluralité de supports inférieurs (6) s'étend depuis l'extrémité supérieure de l'élément inférieur (3); le support supérieur (5) est configuré en conséquence pour s'engager avec le support inférieur (6) pour former une jonction avec un intervalle (7) formé dans celui-ci de telle sorte que lorsqu'un déplacement relatif est provoqué entre le support supérieur (2) et le support inférieur (3) pour réduire l'espace, le support supérieur (5) et le support inférieur (6) se touchent pour former une limitation mutuelle.

2. Cellule de charge multiaxiale selon la revendication 1, dans laquelle lesdites au moins quatre jauges de contrainte sont disposées respectivement au milieu d'une même surface latérale du faisceau de mesure de force (4) dans les directions longitudinale, transversale, positive à 45° et négative à 45° pour mesurer la contrainte longitudinale, la contrainte transversale et les contraintes de cisaillement positive à 45° et négative à 45°, respectivement.

3. Cellule de charge multiaxiale selon la revendication 2, dans laquelle les quatre jauges de contrainte sont disposées sur chacun des deux côtés opposés du faisceau de mesure de force (4) respectivement; lesdites jauges de contrainte sont disposées respectivement dans les directions longitudinale, transversale, positive à 45° et négative à 45° pour mesurer la contrainte longitudinale, la contrainte transversale et les contraintes de cisaillement positive à 45° et négative à 45°, respectivement.

4. Cellule de charge multiaxiale selon la revendication 2, dans laquelle cinq jauges de contrainte sont disposées sur chacun des deux côtés opposés du faisceau de mesure de force (4) respectivement; et quatre jauges de contrainte sont disposées respectivement dans les directions longitudinale, transversale, positive à 45° et négative à 45° pour mesurer la contrainte longitudinale, la contrainte transversale et les contraintes de cisaillement positive à 45° et négative à 45°, respectivement; l'autre desdites jauges de contrainte est agencée dans la direction longitudinale pour mesurer la contrainte longitudinale.

5. Cellule de charge multiaxiale selon la revendication 2, dans laquelle le faisceau de mesure de force (4) présente deux côtés opposés, quatre jauges de contrainte sont disposées respectivement sur un des côtés opposés dans les directions longitudinale, transversale, positive à 45° et négative à 45° pour mesurer la contrainte longitudinale, la contrainte transversale et les contraintes de cisaillement positive à 45° et négative à 45°, respectivement; et
quatre autres jauges de contrainte sont disposées sur l'autre des côtés opposés, deux desdites jauges de contrainte sont agencées dans la direction longitudinale pour mesurer la contrainte longitudinale; les deux autres desdites jauges de contrainte sont disposées dans les directions positive à 45° et négative à 45° pour mesurer les contraintes de cisaillement positive à 45° et négative à 45°, respectivement.

6. Cellule de charge multiaxiale selon la revendication 1, dans laquelle trois jauges de contrainte sont disposées sur chacun de deux côtés opposés du faisceau de mesure de force (4) respectivement; deux des jauges de contrainte sont disposées dans les directions positive à 45° et négative à 45° pour mesurer les contraintes de cisaillement positive à 45° et négative à 45°, respectivement; et l'autre des jauges de contrainte est agencée dans la direction longitudinale pour mesurer la contrainte longitudinale;
deux autres jauges de contrainte sont disposées sur chacun des deux autres côtés opposés du faisceau de mesure de force (4) respectivement dans la direction longitudinale et dans la direction transversale pour mesurer la contrainte longitudinale et la contrainte transversale, respectivement.

7. Cellule de charge multiaxiale selon la revendication 1, dans laquelle quatre jauges de contrainte sont disposées sur chacun des deux côtés opposés du faisceau de mesure de force (4) respectivement; deux des jauges de contrainte sont respectivement disposées sur une partie supérieure et une partie inférieure du faisceau de mesure de force (4) dans la direction longitudinale pour mesurer la contrainte longitudinale de la partie supérieure et de la partie inférieure du faisceau de mesure de force (4); et les deux autres jauges de contrainte sont respectivement disposées dans la partie médiane du faisceau de mesure de force (4) dans la direction longitudinale et dans la direction transversale pour mesurer une contrainte longitudinale et la contrainte transversale de la partie médiane du faisceau de mesure de force (4); et
cinq jauges de contrainte sont disposées sur l'un des deux autres côtés opposés du faisceau de mesure de force (4); trois des cinq jauges de contrainte sont disposées sur une partie supérieure, une partie médiane et une partie inférieure du faisceau de mesure de force (4) dans la direction longitudinale pour mesurer une contrainte longitudinale de la partie supérieure, de la partie médiane et de la partie inférieure; les deux autres des cinq jauges de contrainte sont disposées sur la partie médiane du faisceau de mesure de force (4) dans la direction positive à 45° et dans la direction négative à 45° pour mesurer les contraintes de cisaillement positive à 45° et négative à 45° de la partie médiane du faisceau de mesure de force (4); trois autres jauges de contrainte sont respectivement disposées sur une partie supérieure, une partie médiane et une partie inférieure dans la direction longitudinale sur l'autre des deux côtés opposés pour mesurer les contraintes longitudinales de la partie supérieure, de la partie médiane et de la partie inférieure du faisceau de mesure de force (4).

8. Cellule de charge multiaxiale selon la revendication 1, dans laquelle deux jauges de contrainte sont disposées respectivement sur un de deux côtés opposés du faisceau de mesure de force (4) respectivement dans les directions longitudinale, transversale, positive à 45° et négative à 45° pour mesurer les contraintes de cisaillement positive à 45° et négative à 45°, respectivement; et
deux jauges de contrainte sont disposées sur les deux autres côtés opposés du faisceau de mesure de force (4) dans la direction longitudinale et dans la direction transversale pour mesurer la contrainte longitudinale et la contrainte transversale, respectivement.

9. Cellule de charge multiaxiale selon la revendication 1, dans laquelle deux jauges de contrainte sont disposées respectivement sur un côté du faisceau de mesure de force (4) dans la direction positive à 45° et la direction négative à 45° pour mesurer les contraintes de cisaillement positive à 45° et négative à 45°
et deux jauges de contrainte sont disposées sur le côté opposés du faisceau de mesure de force (4) dans la direction longitudinale et dans la direction transversale pour mesurer la contrainte longitudinale et la contrainte transversale.

10. Cellule de charge multiaxiale selon la revendication 1, **caractérisée en ce qu'**à la fois le nombre de supports supérieurs (5) et le nombre de supports inférieurs (6) sont supérieurs ou égaux à trois.

11. Cellule de charge multiaxiale selon la revendication 10, dans laquelle une plaque (10) est introduite dans l'interstice (7) de la jonction formée par le support supérieur (5) et le support inférieur (6).

12. Cellule de charge multiaxiale selon la revendication 1, dans laquelle une rainure (8) est formée dans l'élément supérieur (2) au-dessus de la jonction du faisceau de mesure de force (4) et de l'élément supérieur (2); et une autre rainure (9) est formée dans l'élément inférieur (3) en dessous de la jonction du faisceau de mesure de force (4) et de l'élément inférieur (3).
